# EUROPEAN PATENT APPLICATION

(11) **EP 1 900 564 A1**
(43) Date of publication of application: **19.03.2008**
(21) Application number: 06767746.8
(22) Date of filing: 26.06.2006
(51) Int. Cl.: B60K 17/04, B60L 11/14, F16H 1/08, F16H 3/66, F16H 57/02, F16H 57/04

(54) **DRIVE DEVICE FOR VEHICLE**

(30) Priority: 24.06.2005 JP 2005184265; 24.06.2005 JP 2005184264; 24.06.2005 JP 2005185404; 24.06.2005 JP 2005185521; 24.06.2005 JP 2005185405
(71) Applicant: Toyota Jidosha Kabushiki Kaisha, Toyota-shi, Aichi 471-8571 (JP)
(72) Inventor: TABATA, Atsushi, c/o TOYOTA JIDOSHA K.K., Toyota-shi, Aichi 471-8571 (JP); MIYAZAKI, Terufumi, c/o TOYOTA JIDOSHA K.K., Toyota-shi, Aichi 471-8571 (JP); KAMADA, Atsushi, c/o TOYOTA JIDOSHA K.K., Toyota-shi, Aichi 471-8571 (JP); TAGA, Yutaka, c/o TOYOTA JIDOSHA K.K., Toyota-shi, Aichi 471-8571 (JP)
(74) Representative: Kuhnen & Wacker
(86) International application number: PCT/JP2006/313168
(87) International publication number: WO 2006/137602

(57) **Abstract**

A miniaturized vehicular drive apparatus is provided with a reduced size in an axial direction without increasing the number of parallel shafts. A first electric motor M1 and a power distributing mechanism (differential portion) 16 are disposed on a first axis CL1, forming a rotational axis of an input rotary member 14, in series starting therefrom and an automatic transmission (transmission portion) 20 is disposed on a second axis CL2 parallel to the first axis CL1. A drive linkage 23 is provided between a power transmitting member 18, acting as a rotary member placed on the first axis CL1 at an end portion thereof in opposition to the input rotary member 14, i.e., in opposition to an engine 8, and a first intermediate shaft (rotary member) 40, disposed on the second axis CL2 at an end portion thereof in opposition to the input rotary member 14, for power transmitting capability. Thus, a power transmitting path is formed in a C-shape, i.e., a U-shape with a reduction in size of the axial direction, enabling the miniaturization to provide a simplified structure without increasing the number of parallel shafts.

## Description

### Technical Field

The present invention relates to a vehicular drive apparatus having a first electric motor, a differential device, a second electric motor and a transmission, a vehicular drive apparatus having an electric motor, a differential portion and a differential drive gear or a vehicular drive apparatus having an input shaft, an electric motor, a differential portion and a transmission portion. More particularly, it relates to a technology of miniaturizing a vehicular drive apparatus in an axial dimension while improving assembling capability, a technology of increasing cooling characteristic of an electric motor and a technology of simplifying a hydraulic circuit structure.

### Background Art

There has been known a vehicular drive apparatus having a first electric motor, a differential device, a second electric motor and a transmission. For instance, a hybrid vehicular drive apparatus, disclosed in Patent Publication 1, represents such a drive apparatus. With such an apparatus disclosed in Patent Publication 1, the first electric motor, the differential device, the second electric motor and the transmission are sequentially disposed on a single axis direction. In installing such component parts, there are supposedly disadvantages such as an increase in vehicle length and an increase in vehicle width. Especially, with a transverse-mounted layout adopted for an FF vehicle or RR vehicle, installation airspace is limited; causing likelihood to occur with a further increase in difficulties being encountered.
That is, if a drive apparatus, adopted in a hybrid vehicle such as, for instance, "PRIUS" (Trademark of a hybrid vehicle manufactured and sold by TOYOTA MOTOR CORPORATION) additionally incorporates a transmission, a need arises for sufficiently studying a layout of component parts to be installed in a limited vehicle width. Moreover, among the increased number of component parts, the electric motor and the transmission, having increased limitations on installations, are independently assembled and resulting in likelihood of a remarkable drop in assembling characteristic. It is thus desired to have a vehicular drive apparatus with a minimized size in an axial direction and increased assembling capability.
Patent Publication 1: Japanese Patent Application Publication 2003-301731

On the contrary, to minimize the size in the axial direction, the drive apparatus may conceivably take a structure including a first electric motor, a differential device, a second electric motor and a transmission that are disposed in series on a power transmitting path provided on plural axes extending parallel to each other. However, no layout technology for such a vehicular drive apparatus incorporating the first electric motor, the differential device, the second electric motor and the transmission has been absolutely known. Even if the drive apparatus taking a rowed structure formed on a plurality of axes, depending on how the component parts are located or how a housing is split, a difficulty has been encountered in minimizing an axial size of the drive apparatus without increasing the number of parallel shafts and accommodating the component parts in a limited vehicle width.

Further, in case of an FF layout, it's often the case for rotary elements, placed on a first axis, to be lubricated with lubricating oil supplied to an axial end of a rotary shaft from an oil pump body cover, disposed in an area facing an engine, or a cover disposed in another area opposite to the engine. However, a transmission portion or shifting portion is disposed on a second axis with a large number of areas needed to have relatively increased lubrications. Thus, if lubricating oil is supplied from the axial end of the rotary shaft, the rotary shaft must have an increased outer diameter and an in-shaft oil passage must have an increased cross-sectional surface area, otherwise inadequate lubrications occur in the component parts in lubricating areas placed on a downstream side of a flow of lubricating oil.
Further, no layout technology on the vehicular drive apparatus including the first electric motor, the differential portion, the second electric motor and the transmission portion has been absolutely known. Even if the drive apparatus is merely formed in a multiple-row structure, an issue arises with a difficulty encountered in adequately minimizing an axial dimension of the drive apparatus depending on a layout of the component parts and how the housing is split. Thus, a remarkable drop occurs in assembling characteristic with a resultant deterioration in workability.

Furthermore, with the vehicular drive apparatus having the electric motor, the differential portion, the transmission portion and the differential drive gear, the electric motor, used for the hybrid system, needs to be large in size with an increase in output torque of the engine. This causes an issue to arise with the occurrence of an increase in a resultant heat value.
Moreover, with the vehicular drive apparatus formed in the multiple-row structure having the first electric motor, the differential portion, the second electric motor and the transmission portion, the differential portion includes an input rotary shaft composed of a plurality of the component parts. Thus, it becomes relatively difficult to provide a lubricating oil passage for lubricating oil to be supplied to an oil passage longitudinally extending through the rotary shaft. If an attempt is made to form a lubricating oil passage in a cover, forming part of a housing, in an area opposite to the engine to supply lubricating oil from an axial end of the input shaft, the cover becomes complicated in structure with a resultant complicated structure in connection up to a first shaft.

The present invention has been completed with the above view in mind and it is a first object of the present invention to provide a downsized or miniatured vehicular drive apparatus with a minimized axial size without increasing the number of parallel shafts. Further, it is a second object of the present invention to provide a vehicular drive apparatus that can adequately lubricate a transmission portion, placed on a second axis, in an area needed for lubrication without increasing a size of a rotary shaft for lubrication.
Furthermore, it is a third object of the present invention to provide a vehicular drive apparatus, formed in a multiple-row structure with a minimized axial size, which has improved assembling workability. Moreover, it is a fourth object of the present invention to provide a vehicular drive apparatus having improved characteristic of cooling an electric motor. In addition, it is a fifth object of the present invention to provide a vehicular drive apparatus having a simplified hydraulic circuit structure for supplying lubricating oil to a rotary shaft on an input side.

### Disclosure of the Invention

For achieving the above first object, the invention recited in claim 1 is featured by a vehicular drive apparatus, having a differential portion for distributing a drive power input to an input rotary member to a first electric motor and a power transmitting member, and a second electric motor disposed in a power transmitting path between the power transmitting member and drive wheels, comprising (a) a transmission portion disposed between the power transmitting member and the drive wheels; (b) the input rotary member, the first electric motor and the differential portion being sequentially disposed on a first axis forming a rotational axis of the input rotary member; (c) the transmission portion being disposed on a second axis parallel to the first axis; and (d) a rotary member located on the first axis at an end portion in opposition to the input rotary member, and a rotary member located on the second axis at another end portion in opposition to the input rotary member, being connected to each other through a drive linkage for power transmissive state.

The invention recited in claim 2 is featured by, in the invention recited in claim 1, further comprising (a) a rotary member rotatably disposed on a fourth axis parallel to the first axis and the second axis; and (b) a final speed reducer disposed on a third axis parallel to the first axis and the second axis; (c) wherein drive power output from the transmission portion placed on the second axis, is transmitted to the final speed reducer via the rotary member rotatable on the fourth axis.

The invention recited in claim 3 is featured by, in the invention recited in claim 1 or 2, the second electric motor is disposed on the first axis between the differential portion and a drive linkage.
The invention recited in claim 4 is featured by, in the invention recited in any one of claims 1 to 3, wherein the drive linkage includes a driving sprocket disposed on the first axis, a driven sprocket disposed on the second axis, and a power transmitting member tensioned between the driving sprocket and the driven sprocket.

The invention recited in claim 5 is featured by, in the invention recited in any one of claims 1 to 3, wherein the drive linkage includes a drive gear disposed on the first axis, and a driven gear disposed on the second axis and driven with the drive gear.
The invention recited in claim 6 is featured by, in the invention recited in any one of claims 1 to 5, further comprising a differential action limiting device disposed on the first axis between the first electric motor and the differential portion to allow the differential portion to be selectively switched to a differential state and a non-differential state.

For achieving the above second object, the invention recited in claim 7 is featured by a vehicular drive apparatus having a differential portion for distributing a drive power input to an input rotary member to a first electric motor and a power transmitting member, a second electric motor disposed in a power transmitting path between the power transmitting member and drive wheels, and a transmission portion disposed between the power transmitting member and drive wheels, comprising (a) the first electric motor, the differential portion, the second electric motor, the power transmitting member and the transmission portion being disposed on a first axis serving as a rotational axis of the input rotary member, and a second axis parallel to the first axis; (b) the transmission portion having a rotational axis placed on the second axis and being mounted on a rotary shaft having a center portion formed with a longitudinal path for introducing lubricating oil; and (b) a support member, rotatably supporting the rotary shaft, having a lubricating oil passage for supplying lubricating oil to the longitudinal path formed inside the rotary shaft.

The invention recited in claim 8 is featured by, in the invention recited in claim 7, wherein the longitudinal path formed in the rotary shaft is elongated to a lubricating area of the transmission portion.
The invention recited in claim 9 is featured by, in the invention recited in claim 7 or 8, further comprising (a) a drive linkage including a drive gear connected to the power transmitting member placed on the first axis, and a driven gear connected to the rotary shaft placed on the second axis to be driven with the drive gear, for transmitting the drive power from the power transmitting member to the rotary shaft; and (b) the longitudinal path formed in the rotary shaft being elongated to the driven gear.

The invention recited in claim 10 is featured by, in the invention recited in any one of claim 7 to 9, further comprising (a) a differential drive gear, for drivably rotating a final speed reducer, which has a shaft portion disposed on the second axis at an end portion thereof with rotatably supported with a housing; (b) wherein the housing is formed with a lubricating oil passage; and (c) the differential drive gear is supplied with lubricating oil from the lubricating oil passage of the housing through a longitudinal path formed in the shaft portion.

For achieving the above second object, the invention recited in claim 11 is featured by, (a) the transmission portion includes a planetary gear type automatic transmission having a hydraulically operated friction engaging device; and (b) a supporting member, rotatably supporting the rotary shaft, is formed with an engaging pressure oil passage for supplying an engaging pressure to the hydraulically operated friction engaging device through the rotary shaft.
The invention recited in claim 12 is featured by, in the invention recited in any one of claims 7 to 11, wherein further comprising a hydraulically operated differential action limiting device disposed in the differential portion for selectively switching the differential portion to a differential state and a non-differential state.

For achieving the above third object, the invention recited in claim 13 is featured by a vehicular drive apparatus, having a differential portion for distributing a drive power input to an input rotary member to a first electric motor and a power transmitting member, a transmission portion disposed between the power transmitting member and drive wheels, and a final speed reducer disposed between the transmission portion and the drive wheels, comprising (a) the power transmitting member being disposed on a first axis forming a rotational axis of the input rotary member; (b) a differential drive gear or an idler gear being disposed on a second axis parallel to the first axis for drivably rotating the transmission portion and the final speed reducer; and (c) the transmission portion having an output rotary member spline-coupled to the differential drive gear.

The invention recited in claim 14 is featured by, in the invention recited in claim 13, further comprising (a) a housing for accommodating component parts located on the first axis and the second axis; (b) wherein the housing includes a first casing portion and a second casing portion for rotatably supporting both end portions of the differential drive gear.
The invention recited in claim 15 is featured by, in the invention recited in claim 14, further comprising (a) a pair of thrust bearings interposed between the differential drive gear and the first casing portion and the second casing portion.

The invention recited in claim 16 is featured by, in the invention recited in claim 15, wherein (a) the differential drive gear comprises a shaft portion, having both ends rotatably supported with the first casing portion and the second casing portion via bearings and having one end spline-coupled to the output rotating member, and an outer circumferential gear portion having an inner circumferential periphery spline-coupled to an outer circumferential periphery of the shaft portion; and (b) the pair of thrust bearings are interposed between both end surfaces of the outer circumferential gear portion and the first casing portion and the second casing portion.
The invention recited in claim 17 is featured by, in the invention recited in claim 16, wherein the outer circumferential gear portion and the shaft portion of the differential drive gear have one partial areas, placed in an axial direction, which are spline-coupled to each other, while other partial areas are held in mating engagement with each other.

For achieving the above third object, the invention recited in claim 18 is featured by a vehicular drive apparatus, having a differential portion for distributing a drive power input to an input rotary member to a first electric motor and a power transmitting member, and a transmission portion disposed between the power transmitting member and drive wheels, comprising (a) the power transmitting member being disposed on a first axis forming a rotational axis of the input rotary member; (b) the transmission portion being disposed on a second axis parallel to the first axis; (c) the transmission portion including an input shaft and an output rotary member disposed on the second axis in series to be rotatable relative to each other; and (d) a support member rotatably supports the input shaft and the output rotary member of the transmission portion.

The invention recited in claim 19 is featured by, in the invention recited in claim 18, wherein (a) the transmission portion comprises an input shaft, an intermediate shaft and an output rotary member, disposed on the second axis in series to be rotatable relative to each other; and (b) the intermediate shaft of the transmission portion has both end portions rotatably supported with the input shaft and the output rotary member.
The invention recited in claim 20 is featured by; in the invention recited in any one of claims 13 to 19, further comprising a second electric motor disposed in a power transmitting path between the power transmitting member and the drive wheels.

The invention recited in claim 21 is featured by, in the invention recited in any one of claims 13 to 20, further comprising a differential action limiting device disposed on the first axis between the first electric motor and the differential portion for selectively switching the differential portion to a differential state and a non-differential state.

For achieving the above fourth object, the invention recited in claim 22 is featured by a vehicular drive apparatus, comprising (a) a differential mechanism for distributing a drive power input from an engine to an electric motor and a power transmitting member; a final speed reducer transmitting the drive power from the power transmitting member to left and right drive wheels; (b) the electric motor and the differential mechanism being placed on a first axis; (c) a differential drive gear disposed on a second axis parallel to the first axis to be driven with the drive power transferred through the power transmitting member for driving the final speed reducer; (d) the final speed reducer being disposed on a third axis parallel to the first axis and the second axis; and (e) a partition wall disposed between an airspace in which the electric motor is placed on the first axis, and an airspace for accommodating the differential drive gear placed on the second axis; (f) wherein a communicating aperture extends through the partition wall between the airspace accommodating the electric motor, and the airspace accommodating the differential drive gear.

The invention recited in claim 23 is featured by, in the invention recited in claim 22, wherein (a) a first electric motor, the differential mechanism and a second electric motor disposed on the first axis in series; (b) a lid-shaped first casing portion covers the first electric motor and the differential drive gear on sides facing the engine; (c) a cylindrical second casing portion is disposed, adjacent to the first casing portion, for defining the airspace together with the first casing portion for accommodating the first electric motor and the differential drive gear therein; (d) a separate wall is provided on the second casing portion for separating the airspace into an air space in which the differential drive gear is located, and an airspace in which the first electric motor is located; and (e) the communicating aperture is defined with a slight clearance between the separate wall and the first casing portion.
The invention recited in claim 24 is featured by, in the invention recited in claim 22 or 23, wherein second axis is installed to be located in an area above the first axis.

For achieving the above fifth object, the invention recited in claim 25 is featured by a vehicular drive apparatus comprising a first input shaft to which a drive power is input from a drive power source; a differential mechanism distributing the drive power input to the input shaft from the drive power source to a first electric motor and a second input shaft, and the second input shaft being disposed on a first axis in series with the first input shaft and having a longitudinal path for introducing lubricating oil in an axial direction; wherein (a) a cylindrical casing portion rotatably supports the second input shaft while surrounding an outer circumferential area thereof; and (b) the casing portion has a lubricating oil passage through which lubricating oil is supplied to the longitudinal path of the second input shaft.

The invention recited in claim 26 is featured by, in the invention recited in claim 25, further comprising a second electric motor through which the second input shaft extends; a pair of support walls protruding radially inward from the casing portion for rotatably supporting a rotor of the second electric motor; and a drive gear rotatably supported with the support wall forming one of the pair of support walls, and being placed in opposition to the drive force source side with located in opposition to the second electric motor; wherein the lubricating oil passage is formed between a support area of the support wall placed in opposition to the drive force source for supporting the rotor of the second electric motor, and a support area for the drive gear.

The invention recited in claim 27 is featured by, in the invention recited in claim 25 or 26, wherein the first electric motor is disposed in an outer circumferential area of the first input shaft.
The invention recited in claim 28 is featured by, in the invention recited in any one of claims 25 to 27, wherein the differential mechanism is provided on an outer circumferential area of the first input shaft.
The invention recited in claim 29 is featured by, in the invention recited in any one of claims 25 to 28, further comprising a differential action limiting device, operative to limit a differential action of the differential mechanism, which is provided on an outer circumferential area of the first input shaft.
The invention recited in claim 30 is featured by, in the invention recited in any one of claims 25 to 29, wherein the second input shaft has an axial end portion held in mating engagement with an axial end portion of the first input shaft to be rotatable relative thereto; and the second input shaft has a longitudinal oil passage held in fluid communication with a longitudinal oil passage formed in the first input shaft.

The invention recited in claim 31 is featured by, in the invention recited in claim 30, wherein an axial end portion of the second input shaft and an axial end portion of the first input shaft, held in mating engagement with each other, have radiated oil passages held in fluid communication with each other in a radial direction for supplying lubricating oil to the differential mechanism via the radiated oil passages.
The invention recited in claim 32 is featured by, in the invention recited in claim 30 or 31, wherein the longitudinal path of the second input shaft extends to a lubricating area of the drive gear to allow lubricating oil to be supplied to the longitudinal path of the second input shaft, via the lubricating oil passage formed in the casing portion, in bifurcated flows to the drive gear side and the differential mechanism side.

According to the invention recited in the claim 1, there is provided a vehicular drive apparatus having a differential portion for distributing drive power input to an input rotary member to a first electric motor and a power transmitting member, and a second electric motor disposed in a power transmitting path between the power transmitting member and drive wheels, the vehicular drive apparatus comprising: (a) a transmission portion disposed between the power transmitting member and drive wheels; (b) wherein the input rotary member, the first electric motor and the differential portion are sequentially disposed on a first axis forming a rotational axis of the input rotary member; (c) wherein the transmission portion is disposed on a second axis parallel to the first axis; and (e) wherein a rotary member located on the first axis at an end portion in opposition to the input rotary member, and a rotary member located on the second axis at another end portion in opposition to the input rotary member, are connected to each other through a drive linkage for power transmissive state. Thus, the power transmitting path is established in a C-shape, i.e., a U-shape configuration to reduce an axial size without increasing the number of parallel shafts with a resultant simplified structure.

Further, the vehicular drive apparatus, recited in claim 2, may further preferably include a rotary member rotatably disposed on a fourth axis parallel to the first and second axes, and a final speed reducer disposed on a third axis parallel to the first and second axes, wherein the drive power output from the transmission portion placed on the second axis is transmitted to the final speed reducer via a rotary member rotatable on the fourth axis. This allows the final speed reducer to be placed in a relatively free layout. In addition, such a drive linkage includes the rotary member placed on the first axis, and a rotary member placed on the second axis, which rotates in the same direction. Thus, with the drive linkage structured of a pair of rotary members between which a driving belt is tensioned, the drive linkage advantageously rotates in the same rotating direction as that of a drive apparatus composed of a drive linkage structured of a pair of a drive gear and a driven gear in mutually meshing engagement.

With the vehicular drive apparatus recited in claim 3, the second electric motor is disposed on the first axis between the differential portion and the drive linkage. This enables a member on a first shaft and another member on a second shaft to be close to each other in an axial size, making it possible to obtain a downsized vehicular drive apparatus as a whole.
With the vehicular drive apparatus recited in claim 4, the drive linkage may preferably include a driving sprocket disposed on the first axis, a driven sprocket disposed on the second axis, and a power transmitting member tensioned between the driving sprocket and the driven sprocket. This enables the driving sprocket and the driven sprocket to be determined in small diameter regardless of a distance between the first and second axes, enabling a vehicular drive apparatus to be downsized and lightweight.

With the vehicular drive apparatus recited in claim 5, the drive linkage may preferably include a drive gear disposed on the first axis, and a driven gear driven with the drive gear disposed on the first axis.
With the vehicular drive apparatus recited in claim 6, the differential portion may preferably include a differential action limiting device disposed on the first axis between the first electric motor and the differential portion to allow the differential portion to be selectively switched in a differential state and a non-differential state, making it possible to select a continuously variable shift running mode and a step-variable shift running mode.

The vehicular drive apparatus, recited in claim 7, may further preferably include a differential portion for distributing drive power input to an input rotary member to a first electric motor and a power transmitting member, a second electric motor disposed in a power transmitting path between the power transmitting member and drive wheels, and a transmission portion disposed between the power transmitting member and drive wheels, comprising: (a) the first electric motor, the differential portion, the second electric motor, the power transmitting member and the transmission portion are disposed on a first axis, serving as a rotational axis of the input rotary member, and a second axis parallel to the first axis; (b) the transmission portion has a rotational axis placed on the second axis and is mounted on a rotary shaft having a center portion formed with a longitudinal path for introducing lubricating oil; and (c) a support member, rotatably supporting the rotary shaft, has a lubricating oil passage for supplying lubricating oil to the longitudinal path formed inside the rotary shaft. Thus, the lubricating oil passage, formed in the support member rotatably supporting the rotary shaft on the second axis, supplies actuating oil to the longitudinal path formed in the rotary shaft. This results in a decrease in distance between an area of the rotary shaft supplied with actuating oil, and an area needed for lubrication enabling the lubricating areas of the transmission portion to be adequately lubricated without causing any increase in size of the rotary shaft for lubrication.
With the vehicular drive apparatus recited in claim 8, the longitudinal path formed in the rotary shaft is elongated to a lubricating area of the transmission portion, making it possible to lubricate the lubricating area in a simplified structure without causing the drive apparatus to be internally formed in a complicated structure.

The vehicular drive apparatus, recited in claim 9, may further preferably include (a) a drive linkage including a drive gear connected to the power transmitting member on the first axis, and a driven gear connected to the rotary shaft on the second axis and driven with the drive gear, for transmitting drive power from the power transmitting member to the rotary shaft; (b) wherein the longitudinal path, formed in the rotary shaft, is elongated to the driven gear. This allows a lubricating oil passage of a support member to deliver lubricating oil to a lubricating oil supply area from which lubricating oil is distributed in two directions; one for a lubricating area of the driven gear and another for a lubricating area of the transmission portion. Thus, the lubricating areas of the driven gear and the transmission portion can be adequately lubricated without increasing a size of the rotary shaft for lubrication.

With the vehicular drive apparatus recited in claim 10, (a) a differential drive gear, for drivably rotating a final speed reducer, which has a shaft portion disposed on the second axis at an end portion thereof with rotatably supported with a housing, (b) the housing is formed with a lubricating oil passage, and (c) the differential drive gear is supplied with lubricating oil from the lubricating oil passage of the housing through a longitudinal path formed in the shaft portion. This enables a large amount of lubricating oil to be supplied to the differential drive gear, having an increased load, in a stable and adequate fashion.

With the vehicular drive apparatus recited in claim 11, (a) the transmission portion may preferably include a planetary gear type automatic transmission having a hydraulically operated friction engaging device, and (b) a supporting member, rotatably supporting the rotary shaft, is formed with a clutch engaging oil passage for supplying an engaging pressure to the hydraulically operated friction engaging device through the rotary shaft. Thus, no need arises for providing a specified wall for supplying the engaging pressure to the transmission portion, resulting in a downsized vehicular drive apparatus.
The vehicular drive apparatus, recited in claim 12, may further preferably comprise, in addition to the differential portion, a hydraulically operated differential action limiting device for selectively switching the differential portion in a differential state and a non-differential state. The hydraulically operated differential action limiting device limits a differential action of the differential portion. Under a vehicle running condition particularly where a vehicle runs on a high load at a high speed, there is no need for a so-called electrical path to be provided for driving the second electric motor with electric power generated by the first electric motor. This results in further improvement in fuel consumption.

According to the invention recited in the claim 13, there is provided a vehicular drive apparatus, having a differential portion for distributing drive power, input to an input rotary member, to a first electric motor and a power transmitting member, a transmission portion disposed between the power transmitting member and drive wheels, and a final speed reducer disposed between the transmission portion and the drive wheels, comprising:(a) the power transmitting member is disposed on a first axis forming a rotational axis of the input rotary member; (b) wherein a differential drive gear or an idler gear are disposed on a second axis parallel to the first axis for drivably rotating the transmission portion and the final speed reducer; and (c) wherein an output rotary member of the transmission portion is spline-coupled to the differential drive gear.
This enables a pair of casing portions, which rotatably support the differential drive gear, to be assembled to each other with the differential drive gear or the idler gear being rotatably supported. Thereafter, the output rotary member of the transmission portion can be spline-coupled to the differential drive gear with incapability of rotating relative to each other, providing an ease of assembling. That is, the transmission portion can be assembled independently of the differential drive gear, providing an ease of assembling.

The vehicular drive apparatus, recited in claim 14, may preferably comprise (a) a housing for accommodating component parts located on the first and second axes, and (b) wherein the housing includes first and second casing portions for rotatably supporting both end portions of the differential drive gear. Thus, a pair of first and second casing portions for rotatably supporting the differential drive gear can be assembled to each other with the differential drive gear being rotatably supported. Thereafter, an output rotary member of the transmission portion can be spline-coupled to the differential drive gear with incapability of rotating relative to each other, providing an ease of assembling.

The vehicular drive apparatus, recited in claim 17, may preferably comprise (a) a pair of thrust bearings interposed between the differential drive gear and the first and second casing portions. This allows the thrust bearings to rotatably support the differential drive gear, acting as a helical gear through which relatively large torque is transferred, even in the presence of load acting in a thrust direction.

With the vehicular drive apparatus recited in claim 16, (a) the differential drive gear may preferably comprise a shaft portion, having both ends rotatably supported with the first and second casing portions via bearings and having one end spline-coupled to the output rotating member, and an outer circumferential gear portion having an inner circumferential periphery spline-coupled to an outer circumferential periphery of the shaft portion, (b) wherein the pair of thrust bearings are interposed between both end surfaces of the outer circumferential gear portion and the first and second casing portions. This provides ease of machining and fabricating a differential drive gear formed in relatively large size.
With the vehicular drive apparatus recited in claim 17, the outer circumferential gear portion and the shaft portion of the differential drive gear nay preferably have one partial areas placed in an axial direction which are spline coupled to each other, while other partial areas are held in mating engagement with each other. Thus, radiated load, occurring when applied with relatively large torque, is born with the inner circumferential periphery of the outer circumferential gear portion and the outer circumferential periphery of the shaft portion at the areas held in surface contact with each other in the absence of spline engagement.

According to the invention recited in the claim 18, there is provided a vehicular drive apparatus, having a differential portion for distributing drive power, input to an input rotary member to a first electric motor and a power transmitting member, and a transmission portion disposed between the power transmitting member and drive wheels, comprising: (a) the power transmitting member is disposed on a first axis forming a rotational axis of the input rotary member; (b) wherein the transmission portion is disposed on a second axis parallel to the first axis; and (c) wherein the transmission portion includes an input shaft and an output rotary member disposed on the second axis in series to be rotatable relative to each other; and (d) a support member rotatably supports the input shaft and the output rotary member of the transmission portion. Thus, the transmission portion has the intermediate portion, facing an axis direction, which is not supported, enabling a reduction in axial size of the transmission portion for thereby enabling a vehicular drive apparatus to be downsized.

With the vehicular drive apparatus recited in claim 19, the transmission portion may preferably comprise (a) an input shaft, an intermediate shaft and an output rotary member, disposed on the second axis in series to be rotatable relative to each other, wherein (b) the intermediate shaft of the transmission portion has both ends rotatably supported with the input shaft and the output rotary member. Thus, no need arises for the intermediate shaft of the transmission portion to have a support wall or a support member, enabling a reduction in axial size of the transmission portion to downsize a vehicular drive apparatus.
The vehicular drive apparatus, recited in claim 20, may preferably comprise a second electric motor disposed in a power transmitting path between the power transmitting member and the drive wheels. This allows an output of the second electric motor to drive the drive wheels. The second electric motor is disposed on the first axis.

The vehicular drive apparatus, recited in claim 21, may preferably comprise a differential action limiting device disposed on the first axis between the first electric motor and the differential portion for selectively switching the differential portion in a differential state and a non-differential state. With the differential action limiting device selectively switching the differential portion in the differential state and the non-differential state, a vehicle can run on a continuously variable shifting mode and a step-variable shifting mode.
The vehicular drive apparatus, recited in claim 22, may preferably have a communicating aperture extending through a partition wall in an area between a compartment for accommodating the electric motor and a compartment for accommodating the differential drive gear. This allows lubricating oil, supplied to the differential drive gear for lubricating the same, to flow through the compartment for accommodating the differential drive gear to the compartment for accommodating the electric motor via the communicating aperture. This causes lubricating oil, admitted through the communicating aperture, to cool the electric motor, resulting in increased cooling characteristic of the electric motor.

With the vehicular drive apparatus recited in claim 23, a lid-shaped first casing portion may preferably cover the first electric motor and the differential drive gear at areas facing the engine, and a cylindrical second casing portion is disposed adjacent to the first casing portion and has a compartment associated with the first casing portion for accommodating the first electric motor and the differential drive gear. The second casing portion has a separate wall for separating the compartment into a compartment in which the differential drive gear is located, and a compartment in which the first electric motor is located, while the communicating aperture is defined with a slight clearance between the separate wall and the first casing portion. This provides an advantage of the communicating aperture defined with the first and second casing portions upon merely assembling thereof without requiring any mechanical machining.

With the vehicular drive apparatus recited in claim 24, component parts are installed so that the second axis may be preferably located in an area above the first axis. Therefore, lubricating oil, supplied to the differential drive gear for lubricating the same, runs down through the communicating aperture due to gravity from the compartment, in which the differential drive gear is accommodated, to the compartment in which the electric motor is accommodated. Thus, lubricating oil, flowing through the communicating aperture, cools the electric motor, providing a further increase in cooling capability of the electric motor.
With the vehicular drive apparatus recited in claim 25, the second input shaft may be preferably and rotatably supported with a cylindrical casing portion, covering an outer circumferential periphery of the second input shaft, which has a lubricating oil passage through which lubricating oil is supplied to a longitudinal path of the second input shaft. This enables lubricating oil to be directly supplied from the casing portion to the longitudinal path of the second input shaft. Thus, no need arises for a rear cover, located on a housing at an end thereof, to have a complicated oil passage structure, thereby simplifying an oil passage structure for supplying lubricating oil to a rotary shaft in an input area thereof.

The vehicular drive apparatus, recited in claim 26, may preferably comprise a second electric motor through which the second input shaft extends, a pair of support walls protruding radially inward from the casing portion for rotatably supporting a rotor of the second electric motor, and a drive gear rotatably supported with the support wall, forming one of the pair of support walls and placed in opposition to the drive force source side, with located in opposition to the second electric motor. With the lubricating oil passage formed between a support area of the support wall, placed in opposition to the drive force source, for supporting the rotor of the second electric motor and a support area for the drive gear, lubricating coil can be supplied from a longitudinally intermediate portion of the second input shaft to the longitudinal oil passage of the second input shaft. This enables the longitudinal oil passage to have a smaller flow cross-sectional surface area than that of a case in which lubricating oil is supplied from an axial end, thereby enabling a reduction in diameter of the second input shaft.

With the vehicular drive apparatus recited in claim 27, the first electric motor may be preferably disposed on an outer circumferential periphery of the first input shaft. This allows lubricating oil to be supplied to the support area of the first electric motor via the longitudinal oil passage of the first input shaft.
With the vehicular drive apparatus recited in claim 28, the differential mechanism may be preferably provided on an outer circumferential periphery of the first input shaft and, hence, lubricating oil can be supplied to the differential mechanism via the longitudinal oil passage of the first input shaft.

The vehicular drive apparatus, recited in claim 29, may preferably comprise a differential action limiting device for limiting a differential action of the differential mechanism that is provided on an outer circumferential periphery of the first input shaft and, thus, lubricating oil can be supplied to the differential mechanism via the longitudinal oil passage of the first input shaft.
With the vehicular drive apparatus recited in claim 30, the second input shaft may preferably have an axial end portion held in mating engagement with an axial end portion of the first input shaft to be rotatable relative thereto while providing a fluid communication between a longitudinal oil passage of the second input shaft and a longitudinal oil passage of the first input shaft. This allows lubricating oil to be supplied from the longitudinal oil passage of the second input shaft to the longitudinal oil passage of the first input shaft.

With the vehicular drive apparatus recited in claim 31, the axial end portion of the second input shaft and the axial end portion of the first input shaft, fitted to each other, may preferably have radiated oil passages held in fluid communication with each other in a radial direction, though which lubricating oil is supplied to the differential mechanism via the radiated oil passages. This allows lubricating oil to be supplied to the differential mechanism at an adequate flow rate.
With the vehicular drive apparatus recited in claim 32, the longitudinal path of the second input shaft may preferably extend to a lubricating area of the drive gear to allow lubricating oil to be supplied to the longitudinal path of the second input shaft via the lubricating oil passage formed in the casing portion in bifurcated flows to the drive gear side and the differential mechanism side. This makes it possible for the drive gear and the differential mechanism to be adequately supplied with lubricating oil at relatively great flow rates even if the longitudinal flow passage of the second input shaft has a relatively small flow cross-sectional surface area.

### Brief Description of the Drawings

Fig. 1 is a schematic view showing a drive apparatus for a hybrid vehicle, which is constructed according to one embodiment of the present invention;
Fig. 2 is a table indicating shifting actions of the drive apparatus of the hybrid vehicle of the embodiment of Fig. 1 operable in a selected one of a continuously-variable shifting state and a step-variable shifting state, in relation to different combinations of operating states of hydraulically operated frictional engaging devices to effect the respective shifting actions;
Fig. 3 is a collinear chart indicating relative rotating speeds of rotary elements of the drive apparatus of the hybrid vehicle of the embodiment of Fig. 1 operated in the step-variable shifting state, in different gear positions of the drive apparatus;
Fig. 4 is a view showing an example of an operating state of a power distributing mechanism of the drive apparatus placed in the continuously-variable shifting state, the view corresponding to a part of the collinear chart of Fig. 3 which shows the power distributing mechanism;
Fig. 5 is a view showing the operating state of the power distributing mechanism placed in the step-variable shifting state by engagement of a switching clutch C0, the view corresponding to the part of the collinear chart of Fig. 3 which shows the power distributing mechanism;
Fig. 6 is a view indicating input and output signals of an electronic control device provided in the drive apparatus of the embodiment of Fig. 1;
Fig. 7 is a functional block diagram illustrating major control functions performed by the electronic control device of Fig. 6;
Fig. 8 is a view indicating a stored predetermined relationship used by the switching control means of Fig. 7 for switching between a continuously variable shifting region and a step-variable shifting region;
Fig. 9 is a view indicating a stored predetermined relationship used by the switching control means of Fig. 7, which is different from that of Fig. 8;
Fig. 10 is a view showing an example of a manually operated shifting device used to manually shift the vehicular drive apparatus of Fig. 1;
Fig. 11 is a fragmentary cross sectional view of a part of the drive apparatus of Fig. 1 including a first planetary gear set and two electric motors;
Fig. 12 is a fragmentary cross sectional view of another part of the drive apparatus of Fig. 1 which includes second, third and fourth planetary gear set and a final reduction gear device;
Fig. 13 is a transverse cross sectional view for explaining relative positions of first, second and third axes of the vehicular drive apparatus of Fig. 1;
Fig. 14 is a flow chart illustrating a process of assembling the vehicular drive apparatus of Fig. 1;
Fig. 15 is a fragmentary enlarged view in cross section showing the first electric motor, the first planetary gear set, and other components adjacent to the first electric motor and the first planetary gear set;
Fig. 16 is a fragmentary enlarged view in cross section showing a differential drive gear, and components adjacent to the differential drive gear;
Fig. 17 is a fragmentary enlarged view in cross section showing the second electric motor, a drive gear, and components adjacent to the second electric motor and the drive gear;
Fig. 18 is a fragmentary enlarged view in cross section of the driven gear, clutches C1 and C2 of an automatic transmission shown in Fig. 12, and components adjacent to the driven gear and the clutches;
Fig. 19 is a fragmentary cross sectional view showing an arrangement of a drive linkage in another embodiment of this invention;
Fig. 20 is a fragmentary cross sectional view showing an arrangement of a power transmitting path between the differential drive gear and the final reduction gear device, in a further embodiment of this invention;
Fig. 21 is a schematic view showing an arrangement of a vehicular drive apparatus constructed according to another embodiment of this invention;
Fig. 22 is a table indicating gear positions of an automatic transmission of the embodiment of Fig. 21, which are established by engaging actions of respective different combinations of hydraulically operated frictional engaging devices;
Fig. 23 is a schematic view showing an arrangement of a vehicular drive apparatus constructed according to a further of this invention;
Fig. 24 is a table indicating gear positions of an automatic transmission in the embodiment of Fig. 23, which are established by engaging actions of respective different combinations of hydraulically operated frictional engaging devices; and
Fig. 25 is a schematic view showing an arrangement of a vehicular drive apparatus constructed according to a further embodiment of this invention.

### Explanation of References

10: Vehicular drive apparatus
12: Transaxle housing (Housing)
12a: First casing portion
12b: Second casing portion
12c: Third casing portion (Cylindrical casing portion)
12d: Fourth casing portion
14: Input rotary member (First input shaft)
16: Power distributing mechanism (Differential portion)
18: Power transmitting member
19: Drive gear
20: Step-variable automatic transmission (Transmission portion)
21: Driven gear
22: Output rotary member
23, 188: Drive linkage
24: First planetary gear set (Differential mechanism)
36: Final speed reducer
38a, 38b: drive wheels
40: First intermediate shaft (Rotary shaft, Input shaft)
42: Second intermediate shaft (Rotary shaft)
80: Separate wall (Partition wall)
82: Support wall (Support member)
84: Differential drive gear
84a: Outer circumferential gear portion
84b: Shaft portion
88: Bearings
89: Fifth accommodation chamber (Airspace)
91: First accommodation chamber (Airspace)
96, 98: Support wall
104: Support member (Supporting member)
138a, 138b: Radiated oil passages
140: Oil passage
146: Longitudinal oil passage
150: Lubricating oil passage
160: Longitudinal oil passage
164: Lubricating oil passage
172: Lubricating oil passage
178: Thrust bearings
184: Clutch engaging oil passage
190: Driving sprocket
192: Driven sprocket
194: Power transmitting belt (Power transmitting member)
M1: First electric motor
M1r: Rotor
M2: Second electric motor
M2r: Rotor
CL1, CL2, CL3, CL4: First axis, second axis, third axis and fourth axis
C0: Switching clutch (Hydraulically operated differential action limiting device)
B0: Switching brake (Hydraulically operated differential action limiting device)

### Best Mode for Carrying out the Invention

Referring to the drawings, there will be described in detail the preferred embodiments of the present invention.

### <Embodiment 1>

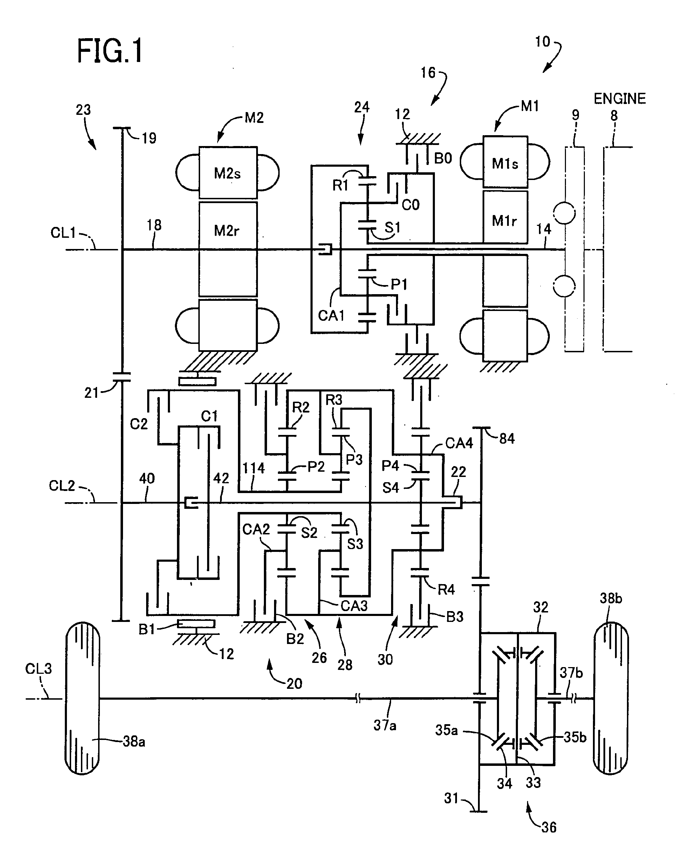

Referring first to the schematic view of Fig. 1, there is shown a drive apparatus 10 for a hybrid vehicle, which is constructed according to one embodiment of this invention. The drive apparatus 10 shown in Fig. 1 includes: an engine 8; a transaxle housing 12 (hereinafter referred to simply as "housing 12"), which is a stationary member attached to the body of the vehicle; a pulsation absorbing damper (vibration damping device) 9; a first input shaft in the form of an input rotary member 14 connected to the engine 8 through the pulsation absorbing damper 9 and receiving an output of the engine 8 through the pulsation absorbing member 9; a first electric motor M1; a hydraulically operated differential limiting device in the form of a switching clutch C0 and a switching brake B0; a differential gear mechanism or differential portion in the form of a power distributing mechanism 16 connected to the input rotary member 14; a power transmitting member 18 disposed downstream of the first input shaft; a second electric motor M2; a step-variable transmission in the form of an automatic transmission portion 20; and a second input shaft in the form of an output rotary member 22.

The above-indicated components 9, 14, M1, C0, B0, 16, 18, M2, 20, 22 are all accommodated within the housing 12, and the components 9, 14, M1, C0, B0, 16, 18 and M2 are disposed coaxially with each other on a first axis CL1, while the components 20 and 22 are disposed coaxially with each other on a second axis CL2 parallel to the first axis CL1. A drive gear 19 located at one axial end of the first axis CL1, and a driven gear 21 located at one axial end of the second axis CL2 and meshing with the drive gear 19 cooperate to constitute a drive linkage 23, which is a part of a power transmitting path between the engine 8 and the output rotary member 22. The automatic transmission portion 20 is disposed in a part of the power transmitting path between the power distributing mechanism 16 and the output rotary member 22, such that the automatic transmission portion 20 is connected in series with the power distributing mechanism 16 through the power transmitting member 18.

The vehicular drive apparatus 10 is suitably installed transversely on an FF (front-engine front-drive) hybrid vehicle, such that the vehicular drive apparatus 10 is disposed between a vehicle drive power source in the form of the engine 8 and a pair of drive wheels (front wheels) 38a, 38b. The output of the engine 8 is transmitted to the drive wheels 38a, 38b through a final reduction gear device (differential gear unit) 36 and a pair of axles 37a, 37b. The final reduction gear device 36 is provided to distribute a torque evenly to the two drive wheels 38a, 38b while permitting them to rotate at different speeds, and includes: a large-diameter gear 31 rotatable about a third axis CL3 parallel to the first and second axes CL1, CL2; a differential casing 32 rotatable with the large-diameter gear 31; a pair of differential small gears 34 supported by a pin 33 fixed to the differential casing 32 perpendicularly to the third axis CL3, such that the differential small gears 34 are rotatable about an axis of the pin 33; and a pair of differential large gears 35a, 35b which are fixed to the respective axes 37a, 37b and which mesh with the respective differential small gears 34.

The power distributing mechanism 16 is a mechanism arranged to mechanically distribute the output of the engine 8 to the first electric motor M1 and the power transmitting member 18, and to mechanically synthesize the output of the engine 8 and the output of the first electric motor M1 into a drive force to be transmitted to the power transmitting member 18. In the present embodiment, the first and second electric motors M1, M2 have respective stators M1s, M2s, and respective rotors M1r, M2r, and each of these motors M1, M2 is a so-called motor/generator operable also as an electric generator. However, the first electric motor M1 is required to function at least as an electric generator capable of generating a reaction force, while the second electric motor M2 is required to function at least as a vehicle drive motor operable to generate a vehicle drive force.

The power distributing mechanism 16 includes a first planetary gear set 24 of single pinion type having a gear ratio ρ1 of about 0.418, for example, and is switchable by the switching clutch C0 and the switching brake B0, between a selected one of a differential state and a non-differential state. The first planetary gear set 24 has rotary elements (elements) consisting of: a first sun gear S1, a first planetary gear P1; a first carrier CA1 supporting the first planetary gear P1 such that the first planetary gear P1 is rotatable about its axis and about the axis of the first sun gear S1; and a first ring gear R1 meshing with the first sun gear S1 through the first planetary gear P1. Where the numbers of teeth of the first sun gear S1 and the first ring gear R1 are represented by ZS1 and ZR1, respectively, the above-indicated gear ratio ρ1 is represented by ZS1/ZR1.

In the power distributing mechanism 16, the first carrier CA1 is connected to the input rotary shaft 14, that is, to the engine 8, and the first sun gear S 1 is connected to the rotor M1r of the first electric motor M1, while the first ring gear R1 and the rotor M2r of the second electric motor M2 are connected to the power transmitting member 18. The switching brake B0 is disposed between the first sun gear S1 and the housing 12, and the switching clutch C0 is disposed between the first sun gear S1 and the first carrier CA 1.
When the switching clutch C0 and brake B0 are both released, the power distributing mechanism 16 is placed in the differential state in which the first sun gear S1, first carrier CA1 and first ring gear R1 are rotatable relative to each other, so as to perform a differential function, so that the output of the engine 8 is distributed to the first electric motor M1 and the power transmitting member 18, whereby a portion of the output of the engine 8 which is distributed to the first electric motor M1 is used to drive the first electric motor M1 to generate an electric energy which is stored or used to drive the second electric motor M2.
Accordingly, the power distributing mechanism 16 is placed in a continuously-variable shifting state in which the rotating speed of the power transmitting member 18 is continuously variable, irrespective of the rotating speed of the engine 8, namely, in the differential state or continuously-variable shifting state in which the power distributing mechanism 16 functions as an electrically controlled continuously variable transmission whose speed ratio γ0 (rotating speed of the input rotary member 14/rotating speed of the power transmitting member 18) is continuously variable from a minimum value γ0min to a maximum value γ0max.

When the switching clutch C0 is engaged during running of the vehicle by the output of the engine 8 while the power distributing mechanism 16 is placed in the continuously-variable shifting state, the first sun gear S1 and the first carrier CA1 are connected together, so that the power distributing mechanism 16 is brought into the non-differential state, namely, in the locked state in which the three rotary elements of the first planetary gear set 24 consisting of the first sun gear S1, first carrier CA1 and first ring gear R1 are rotatable as a unit. In this non-differential state in which the rotating speed of the engine 8 and the rotating speed of the power transmitting member 18 are made equal to each other, the power distributing mechanism is placed in a fixed-speed-ratio shifting state in which the power distributing mechanism 16 functions as a transmission having a fixed speed ratio γ0 equal to 1. When the switching brake B0 is engaged in place of the switching clutch C0, the power distributing mechanism 16 is placed in the non-differential or locked state in which the first sun gear S1 is not rotatable, so that the rotating speed of the first ring gear R1 is made higher than that of the first carrier CA1, whereby the power distributing mechanism 16 is placed in the fixed-speed-ratio shifting state in which the power distributing mechanism 16 functions as a speed-increasing transmission having a fixed speed ratio γ0 smaller than 1, for example, about 0.7.

In the present embodiment described above, the switching clutch C0 and brake B0 function as a differential-state switching device operable to selectively place the power distributing mechanism 16 in the differential state (continuously variable shifting state) and in the non-differential state (locked state). In the differential state the power distributing mechanism 16 functions as an electrically controlled continuously variable transmission the speed ratio of which is continuously variable. In the non-differential state, the first planetary gear set 24 does not function as the electrically controlled continuously variable transmission having the continuously-variable shifting function, that is, in the fixed-speed-ratio shifting state in which the first planetary gear set 24 functions as a transmission having a single gear position with one speed ratio or a plurality of gear positions with respective speed ratios. As described above, the switching clutch C0 and the switching brake B0 also function as the hydraulically operated differential limiting device operable to limit the differential function of the power distributing mechanism 16, that is, the differential function of the first planetary gear set 24.

The drive gear 19 is fixed to one of opposite axial end portions of the power transmitting member 18, which is remote from the engine 8, while the driven gear 21 meshing with the drive gear 19 is fixed to one axial end portion of a first intermediate shaft 40, so that a rotary motion of the power transmitting member 18 is transmitted to the automatic transmission portion 20 through the first intermediate shaft 40. The automatic transmission portion 20 is provided with a first clutch C1 through which a rotary motion of the first intermediate shaft 40 is transmitted to a second intermediate shaft 42, and a second clutch C2 through which the rotary motion of the first intermediate shaft 40 is transmitted to a tubular sun gear shaft 114.

The automatic transmission portion 20 includes a plurality of hydraulically operated frictional engaging devices or engaging devices, and a plurality of planetary gear sets which are a single-pinion type second planetary gear set 26, a single-pinion type third planetary gear set 28 and a single-pinion type fourth planetary gear set 30. The second planetary gear set 26 has: a second sun gear S2; a second planetary gear P2; a second carrier CA2 supporting the second planetary gear P2 such that the second planetary gear P2 is rotatable about its axis and about the axis of the second sun gear S2; and a second ring gear R2 meshing with the second sun gear S2 through the second planetary gear P2. For example, the second planetary gear set 26 has a gear ratio p2 of about 0.562. The third planetary gear set 28 has: a third sun gear S3; a third planetary gear P3; a third carrier CA3 supporting the third planetary gear P3 such that the third planetary gear P3 is rotatable about its axis and about the axis of the third sun gear S3; and a third ring gear R3 meshing with the third sun gear S3 through the third planetary gear P3. For example, the third planetary gear set 28 has a gear ratio p3 of about 0.425.

The fourth planetary gear set 30 has: a fourth sun gear S4; a fourth planetary gear P4; a fourth carrier CA4 supporting the fourth planetary gear P4 such that the fourth planetary gear P4 is rotatable about its axis and about the axis of the fourth sun gear S4; and a fourth ring gear R4 meshing with the fourth sun gear S4 through the fourth planetary gear P4. For example, the fourth planetary gear set 30 has a gear ratio p4 of about 0.424. Where the numbers of teeth of the second sun gear S2, second ring gear R2, third sun gear S3, third ring gear R3, fourth sun gear S4 and fourth ring gear r4 are represented by ZS2, ZR2, ZS3, ZR3, ZS4 and ZR4, respectively, the above-indicated gear ratios p2, p3 and p4 are represented by ZS2/ZR2. ZS3/ZR3, and ZS4/ZR4, respectively. The sun gears S, ring gears R and planetary gears P are all helical gears.

In the automatic transmission portion 20, the second sun gear S2 and the third sun gear S3 are integrally fixed to each other as a unit, selectively connected to the power transmitting member 18 through the above-indicated second clutch C2, and selectively fixed to the housing 12 through a first brake B1. The second carrier CA2 is selectively fixed to the housing 12 through a second brake B2, and the fourth ring gear R4 is selectively fixed to the housing 12 through a third brake B3, while the second ring gear R2, third carrier CA3 and fourth carrier CA4 are integrally fixed to each other and fixed to the output rotary member 22. The third ring gear R3 and the fourth sun gear S4 are integrally fixed to each other and selectively connected to the power transmitting member 18 through the above-indicated first clutch C1.

The above-described switching clutch C0, first clutch C1, second clutch C2, switching brake B0, first brake B1, second brake B2 and third brake B3 are hydraulically operated frictional engaging devices used in a conventional vehicular automatic transmission. Each of these frictional engaging devices except the first brake B1 is constituted by a wet-type multiple-disc engaging device including a plurality of friction plates which are superposed on each other and which are forced against each other by a hydraulic actuator. The first brake B1 is a band brake including a rotary drum and one band or two bands which is/are wound on the outer circumferential surface of the rotary drum and tightened at one end by a hydraulic actuator.

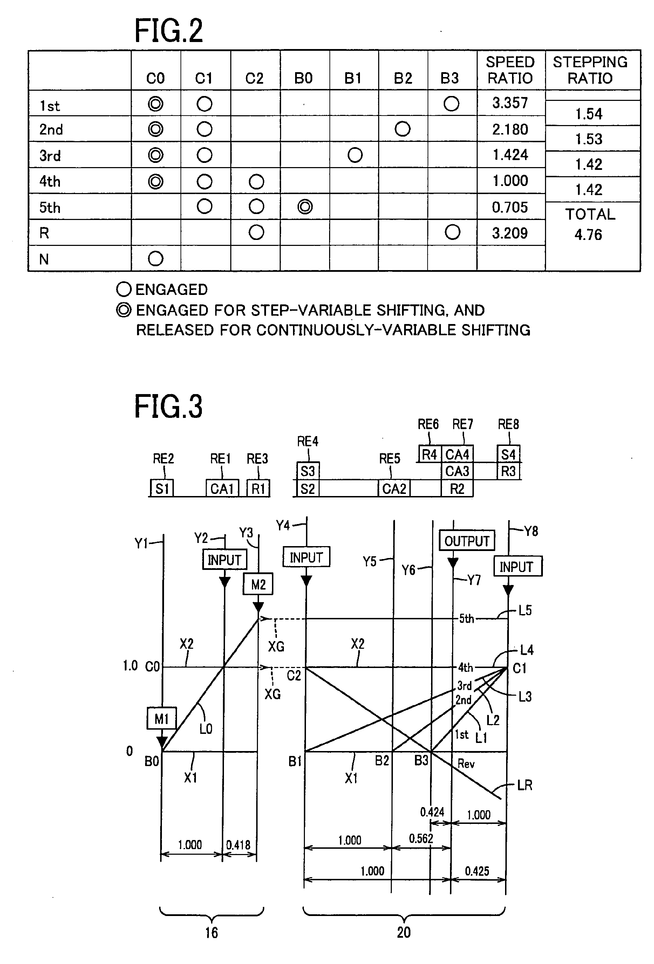

In the drive apparatus 10 constructed as described above, one of a first gear position (first speed position) through a fifth gear position (fifth speed position), a reverse gear position (rear drive position) and a neural position is selectively established by engaging actions of a corresponding combination of the frictional engaging devices selected from the above-described switching clutch C0, first clutch C1, second clutch C2, switching brake B0, first brake B1, second brake B2 and third brake B3, as indicated in the table of Fig. 2. Those gear positions have respective speed ratios γ (input shaft speed N_{IN}/output shaft speed N_{OUT}) which change as geometric series.

In particular, it is noted that the power distributing mechanism 16 is provided with the switching clutch C0 and brake B0, so that the power distributing mechanism 16 can be selectively placed by engagement of the switching clutch C0 or switching brake B0, in the fixed-speed-ratio shifting state in which the power distributing mechanism 16 is operable as a transmission having a single gear position with one speed ratio or a plurality of gear positions with respective speed ratios, as well as in the continuously-variable shifting state in which the power distributing mechanism 16 is operable as a continuously variable transmission, as described above. In the present vehicular drive apparatus 10, therefore, a step-variable transmission is constituted by the automatic transmission portion 20, and the power distributing mechanism 16 which is placed in the fixed-speed-ratio shifting state by engagement of the switching clutch C0 or switching brake B0. Further, a continuously variable transmission is constituted by the automatic transmission portion 20, and the power distributing mechanism 16 which is placed in the continuously-variable shifting state, with none of the switching clutch C0 and brake B0 being engaged.

Where the drive apparatus 10 functions as the step-variable transmission, for example, the first gear position having the highest speed ratio γ1 of about 3.357, for example, is established by engaging actions of the switching clutch C0, first clutch C1 and third brake B3, and the second gear position having the speed ratio γ2 of about 2.180, for example, which is lower than the speed ratio γ1, is established by engaging actions of the switching clutch C0, first clutch C1 and second brake B2, as indicated in Fig. 2. Further, the third gear position having the speed ratio γ3 of about 1.424, for example, which is lower than the speed ratio γ2, is established by engaging actions of the switching clutch C0, first clutch C1 and first brake B1, and the fourth gear position having the speed ratio γ4 of about 1.000, for example, which is lower than the speed ratio γ3, is established by engaging actions of the switching clutch C0, first clutch C1 and second clutch C2.
The fifth gear position having the speed ratio γ5 of about 0705, for example, which is smaller than the speed ratio γ4, is established by engaging actions of the first clutch C1, second clutch C2 and switching brake B0. Further, the reverse gear position having the speed ratio γR of about 3.209, for example, which is intermediate between the speed ratios γ1 and γ2, is established by engaging actions of the second clutch C2 and the third brake B3. The neutral position N is established by engaging only the switching clutch C0.

Where the drive apparatus 10 functions as the continuously-variable transmission, on the other hand, the switching clutch C0 and the switching brake B0 are both released, as indicated in Fig. 2, so that the power distributing mechanism 16 functions as the continuously variable transmission, while the automatic transmission portion 20 connected in series to the power distributing mechanism 16 functions as the step-variable transmission, whereby the speed of the rotary motion transmitted to the automatic transmission portion 20 placed in one of the first, second, third and fourth gear positions, namely, the rotating speed of the power transmitting member 18 is continuously changed, so that the speed ratio when the automatic transmission portion 20 is placed in one of those gear positions is continuously variable over a predetermined range. Accordingly, the speed ratio of the automatic transmission portion 20 is continuously variable across the adjacent gear positions, whereby the overall speed ratio γT of the drive apparatus 10 is continuously variable.

The collinear chart of Fig. 3 indicates, by straight lines, a relationship among the rotating speeds of the rotary elements in each of the gear positions of the drive apparatus 10, which is constituted by the power distributing mechanism 16 functioning as the continuously-variable shifting portion or first shifting portion, and the automatic transmission portion 20 functioning as the step-variable shifting portion or second shifting portion. The collinear chart of Fig. 3 is a rectangular two-dimensional coordinate system in which the gear ratios ρ of the planetary gear sets 24, 26, 28, 30 are taken along the horizontal axis, while the relative rotating speeds of the rotary elements are taken along the vertical axis. A lower one of three horizontal lines X1, X2, XG, that is, the horizontal line X1 indicates the rotating speed of 0, while an upper one of the three horizontal lines, that is, the horizontal line X2 indicates the rotating speed of 1.0, that is, an operating speed N_{E} of the engine 8 connected to the input shaft 14. The horizontal line XG indicates the rotating speed of the power transmitting member 18.

Three vertical lines Y1, Y2 and Y3 correspond to three elements of the power distributing mechanism 16, and respectively represent the relative rotating speeds of a second rotary element (second element) RE2 in the form of the first sun gear S1, a first rotary element (first element) RE1 in the form of the first carrier CA1, and a third rotary element (third element) RE3 in the form of the first ring gear R1. The distances between the adjacent ones of the vertical lines Y1, Y2 and Y3 are determined by the gear ratio ρ1 of the first planetary gear set 24. That is, the distance between the vertical lines Y1 and Y2 corresponds to "1", while the distance between the vertical lines Y2 and Y3 corresponds to the gear ratio ρ1.

Further, five vertical lines Y4, Y5, Y6, Y7 and Y8 corresponding to the automatic transmission portion 20 respectively represent the relative rotating speeds of a fourth rotary element (fourth element) RE4 in the form of the second and third sun gears S2, S3 integrally fixed to each other, a fifth rotary element (fifth element) RE5 in the form of the second carrier CA2, a sixth rotary element (sixth element) RE6 in the form of the fourth ring gear R4, a seventh rotary element (seventh element) RE7 in the form of the second ring gear R2 and third and fourth carriers CA3, CA4 that are integrally fixed to each other, and an eighth rotary element (eighth element) RE8 in the form of the third ring gear R3 and fourth sun gear S4 integrally fixed to each other.
The distances between the adjacent ones of the vertical lines Y4-Y8 are determined by the gear ratios p2, p3 and p4 of the second, third and fourth planetary gear sets 26, 28, 30. Therefore, as shown in Fig. 3, the distance between the vertical lines corresponding to the sun gear and carrier of each of the second, third and fourth planetary gear sets 26, 28, 30 corresponds to "1", while the distance between the vertical lines corresponding to the carrier and ring gear corresponds to the gear ratio ρ.

Referring to the collinear chart of Fig. 3, the power distributing mechanism 16 (continuously variable transmission portion) of the drive apparatus 10 is arranged such that the first rotary element RE1 (first carrier CA1) which is one of the three rotary elements (elements) of the first planetary gear set 24, is fixed to the input rotary member 14, and is selectively connected to one of the other rotary elements, that is, to the first sun gear S1 through the switching clutch C0, and this second rotary element RE2 (first sun gear S1) is connected to the first electric motor M1 and selectively fixed to the housing 12 through the switching brake B0, while the third rotary element RE3 (first ring gear R1) which is the remaining rotary element is fixed to the power transmitting member 18 and connected to the second electric motor M2, so that a rotary motion of the differential mechanism input rotary member 14 is transmitted to the automatic transmission (step-variable transmission portion) 20 through the power transmitting member 18. A relationship between the rotating speeds of the first sun gear S1 and the first ring gear R1 is represented by an inclined straight line L0 which passes a point of intersection between the lines Y2 and X2.

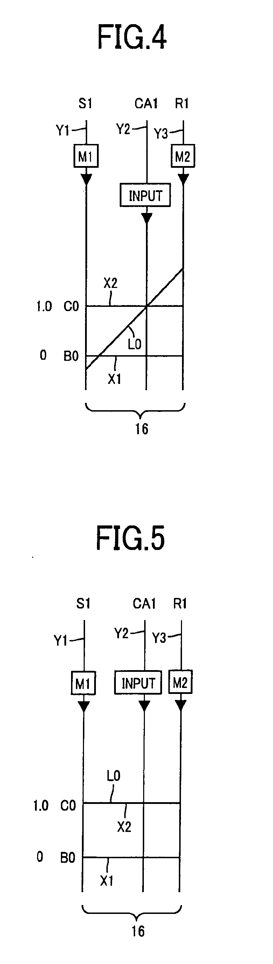

Figs. 4 and 5 correspond to a part of the collinear chart of Fig. 3 which shows the power distributing mechanism 16. Fig. 4 shows an example of an operating state of the power distributing mechanism 16 placed in the continuously-variable shifting state with the switching clutch C0 and the switching brake B0 held in the released state. The rotating speed of the first sun gear S1 represented by the point of intersection between the straight line L0 and vertical line Y1 is raised or lowered by controlling the reaction force generated by an operation of the first electric motor M1 to generate an electric energy, so that the rotating speed of the first ring gear R1 represented by the point of intersection between the lines L0 and Y3 is lowered or raised.

Fig. 5 shows an operating state of the power distributing mechanism 16 placed in the step-variable shifting state with the switching clutch C0 held in the engaged state. When the first sun gear S 1 and the first carrier CA1 are connected to each other, the three rotary elements indicated above are rotated as a unit, so that the straight line L0 is aligned with the horizontal line X2, whereby the power transmitting member 18 is rotated at a speed equal to the engine speed N_{E}. When the switching brake B0 is engaged, on the other hand, the rotation of the first sun gear S1 is stopped, so that the straight line L0 is inclined in the state indicated in Fig. 3, whereby the rotating speed of the first ring gear R1, that is, the rotation of the power transmitting member 18 represented by a point of intersection between the lines L0 and Y3 is made higher than the engine speed N_{E} and transmitted to the automatic transmission portion 20.

In the automatic transmission portion 20, the fourth rotary element RE4 is selectively connected to the power transmitting member 18 through the second clutch C2, and selectively fixed to the housing 12 through the first brake B1, and the fifth rotary element RE5 is selectively fixed to the housing 12 through the second brake B2, while the sixth rotary element RE6 is selectively fixed to the housing 12 through the third brake B3. The seventh rotary element RE7 is integrally fixed to the drive apparatus output rotary member 22, while the eighth rotary element RE8 is selectively connected to the power transmitting member 18 through the first clutch C1.

When the first clutch C1 and the third brake B3 are engaged, the automatic transmission portion 20 is placed in the first gear position as shown in Fig. 3. The rotating speed of the drive apparatus output rotary member 22 in the first gear position is represented by a point of intersection between the vertical line Y7 indicative of the rotating speed of the seventh rotary element RE7 fixed to the drive apparatus output rotary member 22 and an inclined straight line L1 which passes a point of intersection between the vertical line Y8 indicative of the rotating speed of the eighth rotary element RE8 and the horizontal line X2, and a point of intersection between the vertical line Y6 indicative of the rotating speed of the sixth rotary element RE6 and the horizontal line X1. Similarly, the rotating speed of the output rotary member 22 in the second gear position established by the engaging actions of the first clutch C1 and second brake B2 is represented by a point of intersection between an inclined straight line L2 determined by those engaging actions and the vertical line Y7 indicative of the rotating speed of the seventh rotary element RE7 fixed to the output rotary member 22.

The rotating speed of the output rotary member 22 in the third gear position established by the engaging actions of the first clutch C1 and first brake B1 is represented by a point of intersection between an inclined straight line L3 determined by those engaging actions and the vertical line Y7 indicative of the rotating speed of the seventh rotary element RE7 fixed to the output rotary member 22. The rotating speed of the output rotary member 22 in the fourth gear position established by the engaging actions of the first clutch C1 and second clutch C2 is represented by a point of intersection between a horizontal line L4 determined by those engaging actions and the vertical line Y7 indicative of the rotating speed of the seventh rotary element RE7 fixed to the output rotary member 22. In the first-speed through fourth gear positions in which the switching clutch C0 is placed in the engaged state, the eighth rotary element RE8 is rotated at the same speed as the engine speed N_{E}, with the drive force received from the power distributing mechanism 16, that is, from the power distributing mechanism 16.

When the switching brake B0 is engaged in place of the switching clutch C0, the eighth rotary element RE8 is rotated at a speed higher than the engine speed N_{E}, with the drive force received from the power distributing mechanism 16. The rotating speed of the output rotary member 22 in the fifth gear position established by the engaging actions of the first clutch C1, second clutch C2 and switching brake B0 is represented by a point of intersection between a horizontal line L5 determined by those engaging actions and the vertical line Y7 indicative of the rotating speed of the seventh rotary element RE7 fixed to the output rotary member 22. The rotating speed of the output rotary member 22 in the reverse gear position established by the engaging actions of the second clutch C2 and the third brake B3 is represented by a point of intersection between an inclined straight line LR and the vertical line Y7.

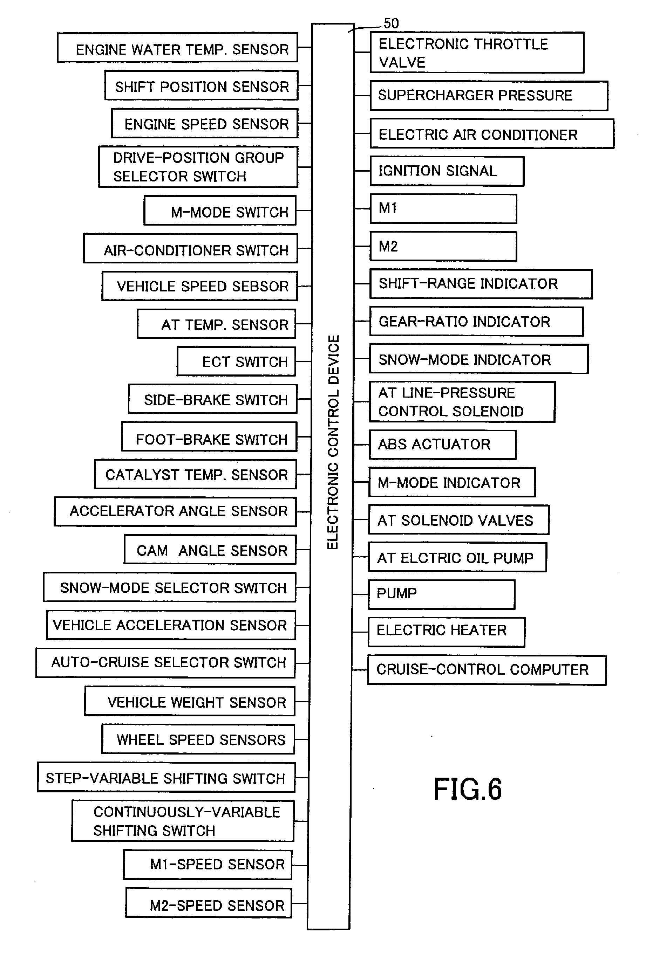

Fig. 6 illustrates signals received by an electronic control device 50 provided to control the drive apparatus 10, and signals generated by the electronic control device 50. This electronic control device 50 includes a so-called microcomputer incorporating a CPU, a ROM, a RAM and an input/output interface, and is arranged to process the signals according to programs stored in the ROM while utilizing a temporary data storage function of the ROM, to implement hybrid drive controls of the engine 8 and electric motors M1 and M2, and drive controls such as a shifting control of the automatic transmission portion 20.

The electronic control device 50 is arranged to receive, from various sensors and switches shown in Fig. 6, various signals such as: a signal indicative of a temperature of cooling water of the engine; a signal indicative of a selected operating position of a shift lever 58; a signal indicative of the operating speed N_{E} of the engine 8; a signal indicative of a value indicating a selected group of forward-drive positions of the transmission mechanism; a signal indicative of an M mode (motor-drive mode); a signal indicative of an operated state of an air conditioner; a signal indicative of a vehicle speed corresponding to the rotating speed of the output rotary member 22; a signal indicative of a temperature of a working oil of the automatic transmission portion 20; a signal indicative of an operated state of a side brake; a signal indicative of an operated state of a foot brake; a signal indicative of a temperature of a catalyst; a signal indicative of an operating amount of an accelerator pedal; a signal indicative of an angle of a cam; a signal indicative of the selection of a snow drive mode; a signal indicative of a longitudinal acceleration value of the vehicle; a signal indicative of the selection of an auto-cruising drive mode; a signal indicative of a weight of the vehicle; signals indicative of speeds of the drive wheels of the vehicle; a signal indicative of an operating state of a step-variable shifting switch provided to place the power distributing mechanism 16 in the fixed-speed-ratio shifting state in which the drive apparatus 10 functions as a step-variable transmission; a signal indicative of a continuously-variable shifting switch provided to place the power distributing mechanism 16 in the continuously variable-shifting state in which the drive apparatus 10 functions as the continuously variable transmission; a signal indicative of a rotating speed N_{M1} of the first electric motor M1; and a signal indicative of a rotating speed N_{M2} of the second electric motor M2.

The electronic control device 50 is further arranged to generate various signals such as: a signal to drive an electronic throttle actuator for controlling an angle of opening of a throttle valve; a signal to adjust a pressure of a supercharger; a signal to operate the electric air conditioner; a signal for controlling an ignition timing of the engine 8; signals to operate the electric motors M1 and M2; a signal to operate a shift-range indicator for indicating the selected operating position of the shift lever; a signal to operate a gear-ratio indicator for indicating the gear ratio; a signal to operate a snow-mode indicator for indicating the selection of the snow drive mode; a signal to operate an ABS actuator for anti-lock braking of the wheels; a signal to operate an M-mode indicator for indicating the selection of the M-mode; signals to operate solenoid-operated valves incorporated in a hydraulic control unit 42 provided to control the hydraulic actuators of the hydraulically operated frictional engaging devices of the power distributing mechanism 16 and the automatic transmission portion 20; a signal to operate an electric oil pump used as a hydraulic pressure source for the hydraulic control unit 42; a signal to drive an electric heater; and a signal to be applied to a cruise-control computer.

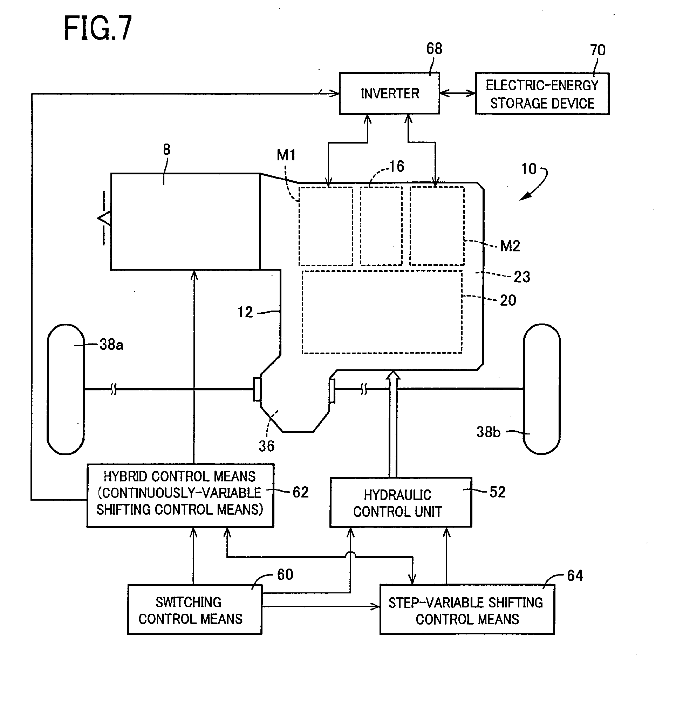

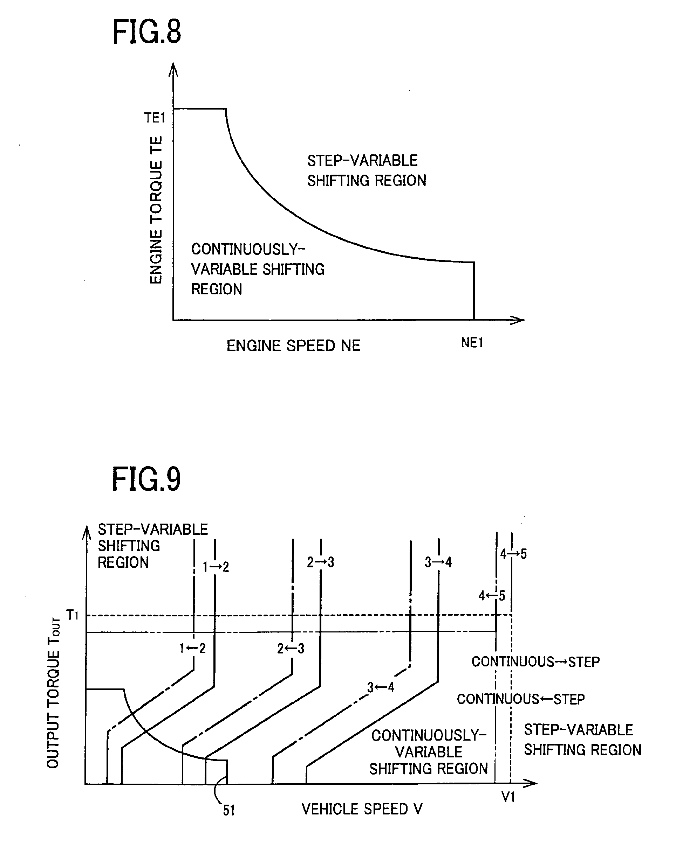

Fig. 7 is a functional block diagram illustrating major control functions performed by the electronic control device 50. Switching control means 60 is arranged to determine whether the vehicle condition is in a continuously-variable shifting region in which the drive apparatus 10 should be placed in the continuously variable shifting state, or in a step-variable shifting region in which the drive apparatus 10 should be placed in the step-variable shifting state. This determination is made on the basis of a stored predetermined relationship shown in Fig. 8 or 9, for example. Where the relationship shown in Fig. 8 (switching boundary line map) is used, the determination is made on the basis of the vehicle condition as represented by the actual engine speed N_{E}, and a drive-force-related value relating to the drive force of the hybrid vehicle, for example, an engine output torque T_{E}.

According to the relationship shown in Fig. 8, the step-variable shifting region is set to be a high-torque region (a high-output running region in which the output torque T_{E} of the engine 8 is not lower than a predetermined value TE1, or a high-speed region in which the engine speed N_{E} is not lower than a predetermined value NE1, namely, a high-vehicle-speed region in which the vehicle speed which is one of the vehicle conditions and which is determined by the engine speed NE and the overall speed ratio γT is not lower than a predetermined value, or a high-output region in which the vehicle output calculated from the output torque T_{E} and speed N_{E} of the engine 8 is not lower than a predetermined value. Accordingly, the step-variable shifting control is effected when the vehicle is running with a comparatively high output torque or speed of the engine 8, or with a comparatively high vehicle output. The step-variable shifting control permits a change of the engine speed N_{E} as a result of a shift-up action of the transmission, that is, a rhythmic change of the speed of the engine 8.

Namely, the continuously-variable shifting state is switched to the step-variable shifting state (fixed-speed-ratio shifting state) when the vehicle is placed in a high-output running state in which a desire of the vehicle operator to increase the vehicle drive force should be satisfied rather a desired to improve the fuel economy. Accordingly, the vehicle operator can enjoy a comfortable rhythmic change of the engine speed N_{E}. On the other hand, the continuously variable shifting control is effected when the vehicle is running with a comparatively low output torque or speed of the engine 8, or with a comparatively low vehicle output, that is, when the engine 8 is a normal output state. A boundary line defining the step-variable shifting region and the continuously variable shifting region in Fig. 8 corresponds to a high-vehicle speed determining line defined by a series of high-vehicle-speed upper limit values, or a high-output running determining line defined by a series of high-output upper limit values.

When the relationship shown in Fig. 9 is used, the above-indicated determination is made on the basis of the actual vehicle speed V and the drive-force-related value in the form of the output torque T_{OUT}. In Fig. 9, a broken line indicates a threshold vehicle speed V1 and a threshold output torque T1 which define a predetermined vehicle condition used for switching from the continuously-variable shifting control to the step-variable shifting control, and two-dot chain line indicates a predetermined vehicle condition used for switching from the step-variable shifting control to the continuously-variable shifting control. Thus, there is provided a hysteresis for determination as to whether the shifting state should be switched between the step-variable shifting region and the continuously variable shifting region. In Fig. 9, a solid line 51 indicates a boundary line defining a motor drive region in which the vehicle is driven by a drive force generated by the electric motor, with a relatively low vehicle output torque or at a relatively low vehicle speed. Fig. 9 also shows a shift boundary data map which uses control parameters in the form of the vehicle speed V and the output torque _{TOUT}.

When the switching control means 60 determines that the vehicle condition is in the step-variable shifting region, the switching control means 60 disables a hybrid control means 62 to effect a hybrid control or continuously-variable shifting control, and enables a step-variable shifting control means 64 to effect a predetermined step-variable shifting control. Where the step-variable shifting control means 64 effects the step-variable shifting control according to the determination made on the basis of the relationship of Fig. 8, the step-variable shifting control means 64 effects an automatic shifting control according to a stored predetermined shift boundary data map. Where the determination is made on the basis of the relationship of Fig. 9, the automatic shifting control is effected according to the shift boundary data map shown in Fig. 9.

Fig. 2 indicates the combinations of the operating states of the hydraulically operated frictional engaging devices C0, C1, C2, B0, B1, B2 and B3, which are selectively engaged for effecting the step-variable shifting control. In this automatic step-variable shifting control mode, the first through fourth gear positions are established by an engaging action of the switching clutch C0, and the power distributing mechanism 16 functions as an auxiliary transmission having a fixed speed ratio of γ0 equal to "1". On the other hand, the fifth gear position is established by an engaging action of the switching brake B0 in place of the switching clutch C0, and the power distributing mechanism 16 functions as an auxiliary transmission having a fixed speed ratio γ0 equal to about 0.7, for example. That is, the drive apparatus 10 as a whole including the power distributing mechanism 16 functioning as the auxiliary transmission and the automatic transmission portion 20 functions as a so-called "automatic transmission", in the automatic step-variable shifting control mode.

The drive-force-related value indicated above is a parameter corresponding to the drive force of the vehicle, which may be the output torque T_{OUT} of the automatic transmission portion 20, the output torque T_{E} of the engine 8, or the acceleration value of the vehicle, as well as the drive torque or drive force of drive wheels 38. The engine output torque T_{E} may be an actual value calculated on the basis of the operating angle of the accelerator pedal or the opening angle of the throttle valve (or intake air quantity, air/fuel ratio or amount of fuel injection) and the engine speed N_{E}, or an estimated value of the required vehicle drive force which is calculated on the basis of the amount of operation of the accelerator pedal by the vehicle operator or the operating angle of the throttle valve. The vehicle drive torque may be calculated on the basis of not only the output torque T_{OUT}, etc., but also the ratio of a differential gear device and the radius of the drive wheels 38, or may be directly detected by a torque sensor or the like.

When the switching control means 60 determines that the vehicle condition is in the continuously-variable shifting region, on the other hand, the switching control means 60 commands the hydraulic control unit 42 to release both of the switching clutch C0 and the switching brake B0 for placing the power distributing mechanism 16 in the electrically established continuously-variable shifting state. At the same time, the switching control means 60 enables the hybrid control means 62 to effect the hybrid control, and commands the step-variable shifting control means 64 to select and hold a predetermined one of the gear positions, or to permit an automatic shifting control according to the stored predetermined shift boundary data map.

In the latter case, the variable-step shifting control means 64 effects the automatic shifting control by suitably selecting the combinations of the operating states of the frictional engaging devices indicated in the table of Fig. 2, except the combinations including the engagement of the switching clutch C0 and brake B0. Thus, the power distributing mechanism 16 placed in the continuously-variable shifting state under the control of the switching control means 60 functions as the continuously variable transmission while the automatic transmission portion 20 connected in series to the power distributing mechanism 16 functions as the step-variable transmission, so that the drive apparatus provides a sufficient vehicle drive force, such that the speed of the rotary motion transmitted to the automatic transmission portion 20 placed in one of the first, second, third and fourth gear positions, namely, the rotating speed of the power transmitting member 18 is continuously changed, so that the speed ratio of the drive apparatus when the automatic transmission portion 20 is placed in one of those gear positions is continuously variable over a predetermined range. Accordingly, the speed ratio of the automatic transmission portion 20 is continuously variable through the adjacent gear positions, whereby the overall speed ratio γT of the drive apparatus 10 as a whole is continuously variable.

The hybrid control means 62 controls the engine 8 to be operated with high efficiency, so as to establish an optimum proportion of the drive forces which are produced by the engine 8, and the first electric motor M1 and/or the second electric motor M2. For instance, the hybrid control means 62 calculates the output as required by the vehicle operator at the present running speed V of the vehicle, on the basis of the operating amount of the accelerator pedal and the vehicle running speed, and calculate a required vehicle drive force on the basis of the calculated required output and a required amount of generation of an electric energy to be stored. On the basis of the calculated required vehicle drive force, the hybrid control means 62 calculates a desired engine speed and a desired total output, and controls the actual output of the engine 8 and the amount of generation of the electric energy by the first electric motor M1, according to the calculated desired total output and engine speed N_{E}.

The hybrid control means 62 is arranged to control the shifting action of the automatic transmission portion 20, while taking account of the presently selected gear position of the automatic transmission portion 20, so as to improve the fuel economy of the engine 8. In the hybrid control, the power distributing mechanism 16 is controlled to function as the electrically controlled continuously-variable transmission, for optimum coordination of the engine speed N_{E} and vehicle speed V for efficient operation of the engine 8, and the rotating speed of the power transmitting member 18 determined by the selected gear position of the automatic transmission portion 20. That is, the hybrid control means 62 determines a target value of the overall speed ratio γT of the transmission mechanism 10 so that the engine 8 is operated according a stored highest-fuel-economy curve that satisfies both of the desired operating efficiency and the highest fuel economy of the engine 8. The hybrid control means 62 controls the speed ratio γ0 of the differential portion 11, so as to obtain the target value of the overall speed ratio γT, so that the overall speed ratio γT can be controlled within a predetermined range, for example, between 13 and 0.5.

The hybrid control means 62 controls an inverter 68 such that the electric energy generated by the first electric motor M1 is supplied to an electric-energy storage device 70 and the second electric motor M2 through the inverter 68. That is, a major portion of the drive force produced by the engine 8 is mechanically transmitted to the power transmitting member 18, while the remaining portion of the drive force is consumed by the first electric motor M1 to convert this portion into the electric energy, which is supplied from the first electric motor M1 to the second electric motor M2 through the inverter 68 and consumed by the second electric motor M2, or supplied from the first electric motor M1 to the electric-energy storage device 70 through the inverter 68 and subsequently consumed by the first electric motor M1. A drive force produced by an operation of the second electric motor M2 or first electric motor M1 with the electric energy generated by the first electric motor M1 is transmitted to the power transmitting member 18. Thus, the transmission mechanism 10 is provided with an electric path through which an electric energy generated by conversion of a portion of a drive force of the engine 8 is converted into a mechanical energy. This electric path includes components associated with the generation of the electric energy and the consumption of the generated electric energy by the second electric motor M2. The hybrid control means 62 can establish a motor-drive mode to drive the vehicle by utilizing the electric CVT function of the power distributing mechanism 16, irrespective of whether the engine 8 is in the non-operated state or in the idling state.

In the above-described arrangements of the switching control means 60, hybrid control means 62 and step-variable shifting control means 64, the power distributing mechanism 16 is placed in the continuously-variable shifting state, assuring a high degree of fuel economy of the vehicle, when the vehicle is in a low- or medium-speed running state or in a low- or medium-output running state, with the engine operated in the normal output state. When the vehicle is in a high-speed running state or at a high speed of operation of the engine 8, on the other hand, the power distributing mechanism 16 is placed in the fixed-speed-ratio shifting state in which the output of the engine 8 is transmitted to the drive wheels 38 primarily through the mechanical power transmitting path, so that the fuel economy is improved owing to reduction of a loss of conversion of the mechanical energy into the electric energy. When the engine 8 is in a high-output state, the power distributing mechanism 16 is placed in the fixed-speed-ratio shifting state.
Thus, the power distributing mechanism 16 is placed in the continuously-variable shifting state, only when the vehicle speed or output is relatively low or medium, so that the required amount of electric energy generated by the first electric motor M1, that is, the maximum amount of electric energy that must be transmitted from the first electric motor M1 can be reduced, whereby the required electrical reaction force of the first electric motor M1 can be reduced, making it possible to minimize the required sizes of the first and second electric motors M1, M2, and the required size of the drive apparatus 10 including the electric motors.

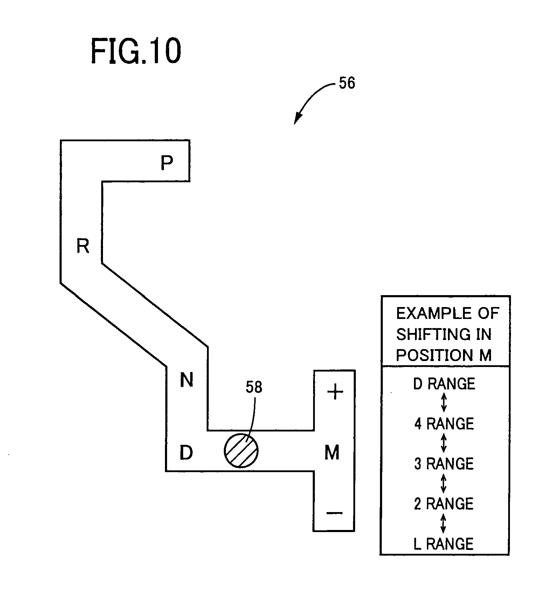

Fig. 10 shows an example of a manually operable shifting device in the form of a shifting device 56. The shifting device 56 includes the above-described shift lever 58, which is disposed laterally adjacent to an operator's seat, for example, and which is manually operated to select one of a plurality of positions consisting of: a parking position P for placing the drive apparatus 10 (namely, automatic transmission portion 20) in a neutral state in which a power transmitting path is disconnected with both of the switching clutch C0 and brake B0 placed in the released state, and at the same time the output rotary member 22 of the automatic transmission portion 20 is in the locked state; a reverse-drive position R for driving the vehicle in the rearward direction; a neutral position N for placing the drive apparatus 10 in the neutral state; an automatic forward-drive shifting position D; and a manual forward-drive shifting position M. The parking position P and the neutral position N are non-driving positions selected when the vehicle is not driven, while the reverse-drive position R, and the automatic and manual forward-drive shifting positions D, M are driving positions selected when the vehicle is driven. The automatic forward-drive shifting position D provides a highest-speed position, and positions "4" through "L" selectable in the manual forward-drive shifting position M are engine-braking positions in which an engine brake is applied to the vehicle.

The manual forward-drive shifting position M is located at the same position as the automatic forward-drive shifting position D in the longitudinal direction of the vehicle, and is spaced from or adjacent to the automatic forward-drive shifting position D in the lateral direction of the vehicle. The shift lever 58 is operated to the manual forward-drive shifting position M, for manually selecting one of the positions "D" through "L". Described in detail, the shift lever 58 is movable from the manual forward-drive shifting position M to a shift-up position "+" and a shift-down position "-", which are spaced from each other in the longitudinal direction of the vehicle. Each time the shift lever 58 is moved to the shift-up position "+" or the shift-down position "-", the presently selected position is changed by one position.

The five positions "D" through "L" have respective different lower limits of a range in which the overall speed ratio γT of the drive apparatus 10 is aut6omatically variable, that is, respective different lowest values of the overall speed ratio γT which corresponds to the highest output speed of the drive apparatus 10. Namely, the five positions "D" through "L" select respective different numbers of the gear positions or speed positions of the automatic transmission portion 20 which are automatically selectable, so that the lowest overall speed ratio γT available is determined by the selected number of the selectable gear positions. The shift lever 58 is biased by biasing means such as a spring so that the shift lever 58 is automatically returned from the shift-up position "+" and shift-down position "-" back to the manual forward-drive shifting position M. The shifting device 46 is provided with shift-position sensors operable to detect the presently selected position of the shift lever 58, so that signals indicative of the presently selected operating position of the shift lever 58 and the number of shifting operations of the shift lever 58 in the manual forward-shifting position M are supplied to the electronic control device 50.

When the shift lever 56 is operated to the automatic forward-drive shifting position D, the switching control means 60 effects an automatic switching control of the drive apparatus 10, and the hybrid control means 62 effects the continuously-variable shifting control of the power distributing mechanism 16, while the step-variable shifting control means 64 effects an automatic shifting control of the automatic transmission portion 20. When the drive apparatus 10 is placed in the step-variable shifting state, for example, the shifting action of the drive apparatus 10 is automatically controlled to select an appropriate one of the first-gear position through the fifth gear position indicated in Fig. 2. When the drive apparatus 10 is placed in the continuously-variable shifting state, the speed ratio of the power distributing mechanism 16 is continuously changed, while the shifting action of the automatic transmission portion 20 is automatically controlled to select an appropriate one of the first-gear through fourth gear positions, so that the overall speed ratio γT of the drive apparatus 10 is controlled so as to be continuously variable within the predetermined range. The automatic forward-drive position D is a position selected to establish an automatic shifting mode (automatic mode) in which the drive apparatus 10 is automatically shifted.

When the shift lever 68 is operated to the manual forward-drive shifting position M, on the other hand, the shifting action of the drive apparatus 10 is automatically controlled by the switching control means 60, hybrid control means 62 and step-variable shifting control means 54, such that the overall speed ratio γT is variable within a predetermined range the lower limit of which is determined by the gear position having the lowest speed ratio, which gear position is determined by the manually selected one of the positions "D" through "L". When the drive apparatus 10 is placed in the step-variable shifting state, for example, the shifting action of the drive apparatus 10 is automatically controlled within the above-indicated predetermined range of the overall speed ratio γT.
When the drive apparatus 10 is placed in the continuously-variable shifting state, the speed ratio of the power distributing mechanism 16 is continuously changed, while the shifting action of the automatic transmission portion 20 is automatically controlled to select an appropriate one of the gear positions the number of which is determined by the manually selected one of the positions "D" through "L", so that the overall speed ratio γT of the drive apparatus 10 is controlled so as to be continuously variable within the predetermined range. The manual forward-drive position M is a position selected to establish a manual shifting mode (manual mode) in which the selectable gear positions of the drive apparatus 10 are manually selected.

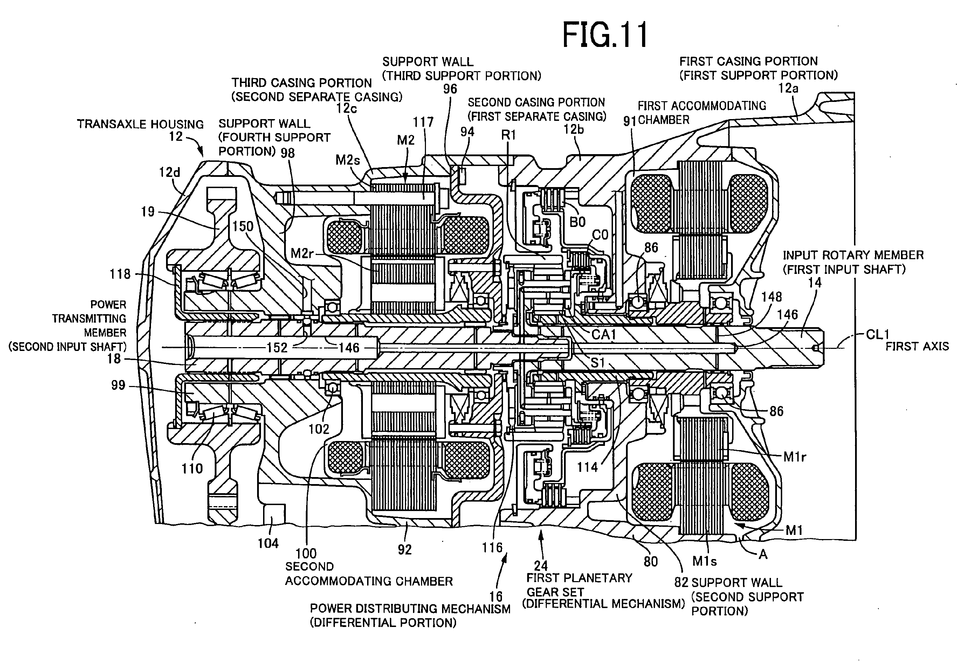

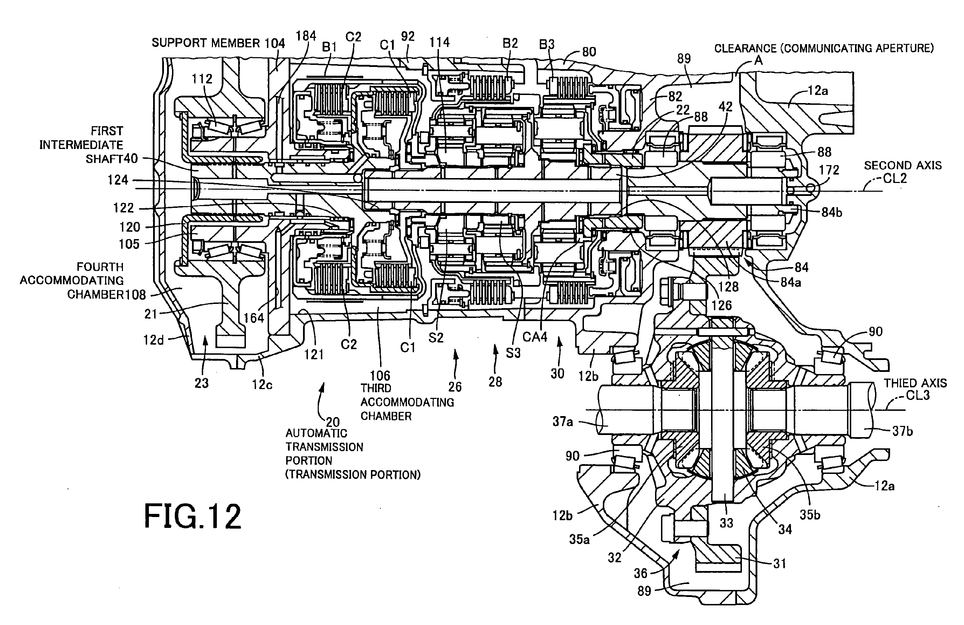

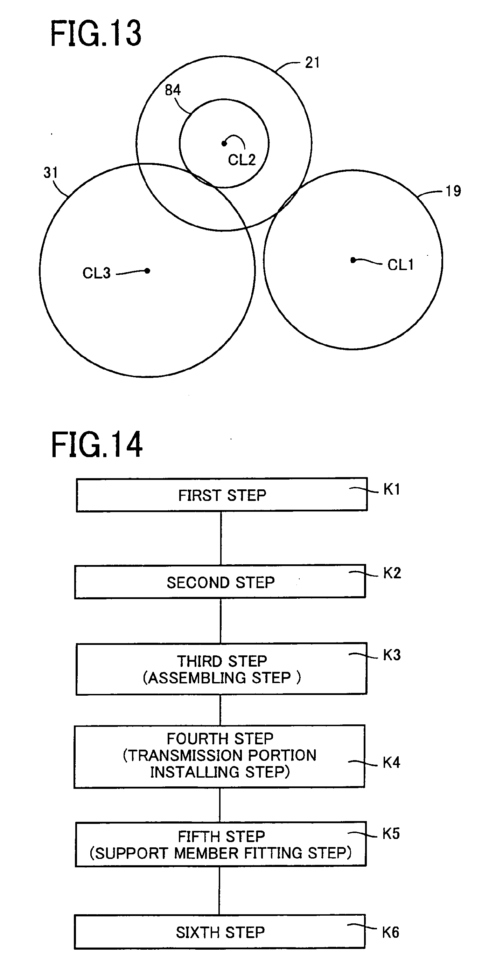

Referring to the cross sectional views of Fig. 11 and 12, there are respectively shown a part of the vehicular drive apparatus 10 which includes the first planetary gear set 24 and the two electric motors M1, M2, and another part of the vehicular drive apparatus 10 which includes the second, third and fourth planetary gear sets 26, 28, 30 and the final reduction gear device 36. In the vehicular drive apparatus 10, the first, second and third axes CL1, CL2, CL3 are positioned relative to each other, as shown in Fig. 13. The cross sectional view of Fig. 11 is taken in a plane including the first axis CL1, while the cross sectional view of Fig. 12 is taken in a plane including the second and third axes CL2, CL3. The horizontal direction as seen in Fig. 13 is the longitudinal or running direction of the vehicle, and the vertical direction as seen the same figure is the vertical direction of the vehicle, while the direction perpendicular to the plane of Fig. 13 (namely, the direction parallel to the axes CL1-CL3) is the transverse or width direction of the vehicle.
The first and third axes CL1, CL3 are spaced apart from each other in the longitudinal direction of the vehicle by a distance determined to prevent an interference between the drive gear 19 and the large-diameter gear 31, and have substantially the same vertical positions. The second axis CL2 is located intermediate between the first and third axes CL1, CL3 in the longitudinal direction, and has a higher vertical position than the first and third axes CL1, CL3.

As shown in Figs. 11 and 12, the housing 12 consists of four separate parts in the form of a cap-shaped first casing portion 12a, a cylindrical second casing portion 12b, a cylindrical third casing portion 12c and a cap-shaped fourth casing portion 12d, which are arranged in the axial direction parallel to the axes CL1-CL3 and which are fastened together by bolts (not shown) into a fluid-tight housing structure. The first, second, third and fourth casing portions 12a, 12b, 12c, 12d are light-alloy castings, for instance, formed of aluminum by die casting.

The first casing portion 12a is also bolted to the engine 8, and fixed to the second casing portion 12b, so as to close one of opposite axial openings which is on the side of the engine 8. The second casing portion 12b includes an integral partition wall 80 which divides its interior space into a space on the side of the first axis CL1, and a space on the side of the second axis CL2. The second casing portion 12 further includes an integral partition wall 82 which divides its interior space into a space on the side of the engine 8, and a space remote from the engine 8. In the space defined by the first casing portion 12a and the partition wall 82 of the second casing portion 12b, there are accommodated the first electric motor M1 coaxially with the first axis CL1, a differential drive gear 84 coaxially with the second axis CL2, and the final reduction gear device 36 coaxially with the third axis CL3.
The rotor M1r of the first electric motor M1 is rotatably supported by the first casing portion 12a and the partition wall 82 of the second casing portion 12b, via a pair of bearings 86, and the differential drive gear 84 is rotatably supported by the first casing portion 12a and the partition wall 82, via a pair of bearings 88, while the differential casing 32 of the final reduction gear device 36 is rotatably supported by the first and second casing portions 12a, 12b, via a pair of bearings 90. The differential drive gear 84 consists of an annular outer gear portion 84a meshing with the large-diameter gear 31, and a shaft portion 84b which is splined to the inner circumferential surface of the outer gear portion 84a and which supports the outer gear portion 84a. The large-diameter gear 31 and the outer gear portion 84a are both helical gears.

The partition wall 80 of the second casing portion 12b has an axial extension protruding toward the first casing portion 12a, and divides the interior space between the first and second casing portions 12a, 12b, into a fifth accommodating chamber 89 accommodating the differential drive gear 84, and a first accommodating chamber 91 accommodating the first electric motor M1. The free or distal end of the extension of the partition wall 80 and the first casing portion 12a cooperate to define a gap A which permits a flow of a lubricant from the fifth accommodating chamber 89 to the first accommodating chamber 91. The gap A may be considered to function as a hole formed through the partition wall 80, for communication between the fifth accommodating chamber 89 and the first accommodating chamber 91.

The power distributing mechanism 16 is accommodated coaxially with the first axis CL1, in one of the four spaces provided in the second casing portion 12b and defined by the two partition walls 80, 82, which one space is on the side of the first axis CL1 and on the side remote from the engine 8.

The third casing portion 12c includes an integral partition wall 92 located adjacent to the partition wall 80 in the axial direction, and an integral support wall 98, and is provided with a separate support wall 96 removably fixed thereto by bolts 94. The partition wall 92 and the support walls 96, 98 cooperate to define a space in the form of a second accommodating chamber 100 in which the second electric motor M2 is accommodated coaxially with the first axis CL1. The support wall 96 defines one of opposite axial ends of the second accommodating chamber 100 which is on the side of the engine 8, while the support wall 98 defines the other axial end of the second accommodating chamber 100 which is remote from the engine 8. The rotor M2r of the second electric motor M2 is rotatably supported by the support walls 96, 98, via a pair of bearings 102.

The third casing portion 12c is further provided with a separate support member 104 in the form of a circular disk fitted therein and bolted thereto, so as to define one of opposite axial ends of the space provided in the third casing portion 12c and located on the side of the second axis CL2, which one axial end is remote from the engine 8. This support member 104 functions as a support member for rotatably supporting the first intermediate shaft 40 and the second intermediate shaft 42, and is fixed removably to the third casing portion 12c by bolts (not shown). The support member 104 of the third casing portion 12c and the support wall 82 of the second casing portion 12b cooperate to define opposite axial ends of a third accommodating chamber 106 in which the automatic transmission portion 20 is accommodated coaxially with the second axis CL2.

The support wall 98 and support member 104 of the third casing portion 12c cooperate with the fourth casing portion 12d to define a fourth accommodating chamber 108 in which the drive linkage 23 consisting of the mutually meshing drive and driven gears 19, 21 is accommodated. The support wall 98 includes a cylindrical projection 99 extending in the axial direction away from the second electric motor M2, that is, toward the fourth casing portion 12d, while the support member 104 includes a cylindrical projection 105 extending in the same axial direction. The drive gear 19 is rotatably supported by the cylindrical projection 99 via bearings 110, while the driven gear 21 is rotatably supported by the cylindrical projection 105 via bearings 112.

The input rotary member 14 and the power transmitting member 18 disposed on the first axis CL1 have axial end portions coupled together such that the axial end portion of the power transmitting member 18 is fitted in a hole formed in the axial end portion of the input rotary member 14, such that the input rotary member 14 and the power transmitting member 18 are rotatable relative to each other. The input rotary member 14 is rotatably supported at an intermediate axial portion thereof by the first casing portion 12a, and at its above-indicated axial end portion by the above-indicated axial end portion of the power transmitting member 18, indirectly via needle bearings. The power transmitting member 18 is rotatably supported indirectly by the support wall 96 via a needle bearing, and directly by the support wall 98.
In the present embodiment, the input rotary member 14 and the power transmitting member 18 respectively function as the first and second input shafts. On the first input shaft 14, there are coaxially disposed the first electric motor M1, hydraulically operated frictional engaging devices in the form of the switching clutch C0 and brake B0, and power distributing mechanism 16. On the second input shaft 18, there is coaxially disposed the second electric motor M2.

The stator M1s of the first electric motor M1 is fitted in the second casing portion 12b, in contact with the inner circumferential surface of the second casing portion 12b, and the rotor M1r is splined to a tubular sun gear shaft 114 which has the first sun gear S 1 formed at one axial end portion and which extends through the support wall 82. Accordingly, the rotor M1r and the first sun gear S1 are rotated together. The sun gear shaft 114 is rotatably supported by the outer circumferential surface of the input rotary member 14. The axial end portion of the input rotary member 14 which is remote from the engine 8 is integrally fixed to the first carrier CA1, so that the first carrier CA1 is rotated together with the input rotary member 14. Accordingly, the input rotary member 14 also functions as an input shaft of the first planetary gear set 24 or the power distributing mechanism 16.

A support member 116 in the form of a circular disc is provided to support the cylindrical first ring gear R1 of the first planetary gear set 24, such that the support member 116 is splined to the inner circumferential surface of the first ring gear R1 and to the outer circumferential surface of an axial end portion of the power transmitting member 18, so that the first ring gear R1 and the power transmitting member 18 are rotated as a unit. The switching clutch C1 is disposed between the support wall 82 and the first planetary gear set 24, to selectively connect the first carrier CA1 and the sun gear shaft 114, while the switching brake B0 is disposed radially outwardly of the first planetary gear set 24, more precisely, between the first planetary gear set 24 and the inner surface of the second casing portion 12b, to selectively fix the sun gear shaft 114 to the second casing portion 12b.

The stator M2s of the second electric motor M2 is fixed to the inner surface of the third casing portion 12c by bolts 117, while the rotor M2r of the second electric motor M2 is rotatably supported by the support wall 96 and the support wall 98 via a pair of bearings 102. The tubular power transmitting member 18 has stepped axial portions having different diameters which decrease in the axial direction from the support wall 98 toward the engine 8. The power transmitting member 18 extends through the rotor M2r of the second electric motor M2, and is splined to the inner circumferential surface of the rotor M2r, so that the power transmitting member 18 and the rotor M2r are rotated as a unit.
Accordingly, the power transmitting member 18 can be inserted through the second electric motor M2, first planetary gear set 24 and first electric motor M1, after the third casing 12c in which the second electric motor M2 is fixed in place is assembled with respect to the second casing 12b in which the first electric motor M1 and the first planetary gear set 24 are positioned in place. A cylindrical connecting member 118 fixed to the inner circumferential surface of the drive gear 19 is splined to the outer circumferential surface of the axial end portion of the power transmitting member which is remote from the engine 8, so that the drive gear 19 is fitted on the above-described axial end portion of the power transmitting member 18 via the connecting member 118, such that the drive gear 19 and the power transmitting member 18 are rotated as a unit.

The first intermediate shaft 40, second intermediate shaft 42, output rotary member 22 and differential drive gear 84 are arranged coaxially with the second axis CL2, in the axial direction in the order of description from the driven gear 21 toward the side of the engine 8. A cylindrical connecting member 120 fixed to the inner circumferential surface of the driven gear 21 is splined to the axial end portion of the first intermediate shaft 40 which is remote from the second intermediate shaft 42. The third accommodating chamber 106 formed in the second and third casing portions 12b, 12c and between the support member 104 and the support wall 82 to accommodate the automatic transmission portion 20 has stepped axial portions the inner circumferential surfaces of which have different diameters decreasing in the axial direction from the support wall 82 toward the driven gear 21. Accordingly, the automatic transmission portion 20 can be installed into the third accommodating chamber 106 through an opening 121 of the chamber 106, in the absence of the support member 104. The support member 104 is fitted in a shoulder part of the third casing portion 12c, with high degrees of accuracy of positioning in the axial and radial directions, and is removably fixed to the third casing portion 12c by bolts (not shown).

The third accommodating chamber 106 accommodating the automatic transmission portion 20 is not provided with any support wall, so that the axial dimension of the third accommodating chamber 106 is minimized. Described more specifically, the first intermediate shaft 40 is rotatably supported by the support member 104 via a needle bearing 122, and the axial end portion of the comparatively long second intermediate shaft 42 which is on the side of the first intermediate shaft 40 is fitted in a hole formed in the adjacent axial end portion of the first intermediate shaft 40 and is rotatably supported by the first intermediate shaft 40 via a bushing 122, while the axial end portion of the second intermediate shaft 4 which is on the side of the differential drive gear 84 is fitted in the tubular output rotary member 22 rotatably supported by the support wall 82 via a needle bearing 126, and is rotatably supported by the output rotary member 22 via a bushing 128.
Thus, the first intermediate shaft 40 and the output rotary member 22 which respectively function as the input and output shafts of the automatic transmission portion 20 are rotatably supported by the support member 104 and the support wall 82, while the second intermediate shaft 42 which is disposed between the first intermediate shaft 40 and output rotary member 22 and which functions as an intermediate shaft of the automatic transmission portion 20 is rotatably supported at its opposite axial end portions by the first intermediate shaft 40 and the output rotary member 22, without any intermediate support wall supporting the second intermediate shaft 42 which supports the second, third and fourth planetary gear sets 26, 28, 30. Accordingly, the required axial dimension of the automatic transmission portion 20 can be reduced.

The sun gear shaft 114 is rotatably supported by the second intermediate shaft 42, and the first clutch C1 is disposed between the first and second intermediate shafts 40, 42, while the second clutch C2 is disposed between the first intermediate shaft 40 and the sun gear shaft 114. The second and third sun gears S2, S3 are formed integrally with the sun gear shaft 114. The output rotary member 22 is connected to the fourth carrier CA4, and is splined to the shaft portion 84b of the differential drive gear 84.
The second and third brakes B2, B3 have friction plates and pistons having an outside diameter smaller than the inside diameter of the opening 121 of the third accommodating chamber 106, so that the second and third brakes B2, B3 can be installed in the third accommodating chamber 106, through the opening 131 in the absence of the support member 104. Similarly, a sub-assembly of the first and second clutches C1, C2 mounted on the outer circumferential surface of the first intermediate shaft 40, and a sub-assembly of the second, third and fourth planetary gear sets 26, 28 and 30 mounted on the outer circumferential surface of the second intermediate shaft 42 have outside diameters smaller than the inside diameter of the opening 121, so that those sub-assemblies can be installed in place in the third accommodating chamber 106, through the opening 131 in the absence of the support member 104.

The vehicular drive apparatus 10 constructed as described above is assembled as indicated in the flow chart of Fig. 14. In a first step K1, the first casing portion 12a and the second casing portion 12b are assembled together, and the first electric motor M1, differential drive gear 84 and final reduction gear device 36 are accommodated in the space between the first casing portion 12a and the second casing portion 12b, such that the first electric motor M1 is coaxial with the first axis CL1, while the differential drive gear 84 and final reduction gear device 36 are coaxial with the respective second and third axes CL2, CL3. The differential drive gear 84 is installed independently of and prior to the installation of the automatic transmission portion 20.

In a second step K2, the input rotary member 14 is inserted to extend through the first electric motor M1 installed in the space between the first and second casing portions 12a, 12b, and the switching clutch C0, switching brake B9 and a sub-assembly of the first planetary gear device 34 are installed in a portion of the space within the second casing portion 12b, into which portion the axial end portion of the input rotary member 14 remote from the engine 8 extends. It is noted that the first and second steps K1 and K2 may be implemented after fourth and fifth steps K4, K5 described below. In a third step K3 (assembling step), the second casing portion 12 (first separate casing), and the third casing portion (second separate casing) in which the second electric motor M2 has been installed are assembled together, and the power transmitting member 18 is inserted into the second electric motor M2 and the first planetary gear set 24.

In a fourth step K4 (transmission-portion installing step), the piston and friction plates of the third brake B3, and the piston and friction plates of the second brake B2 are installed in the third accommodating chamber 106, through the opening 121 of the third casing portion 12c, such that the third brake B3 is located on one of opposite axial sides of the second brake B2 which is remote from the opening 121. Then, the sub-assembly of the second, third and fourth planetary gear sets 26, 28, 30 mounted on the second intermediate shaft 42 is installed in the third accommodating chamber 106, and the first clutch C1, second clutch C2 and first intermediate shaft 40 are inserted in the third accommodating chamber 106. In this fourth step K4, the output rotary member 22 of the automatic transmission portion 20 which is connected to the fourth carrier CA4 of the fourth planetary gear set 30 is splined to the shaft portion 84b of the differential drive gear 84 supported by the first and second casing portions 12a, 12b already assembled together, so that the output rotary member 22 and the differential drive gear 84 are rotated as a unit. In a fifth step K5 (support-member fitting step), the support member 104 is fitted in the third casing portion 12c, and fixed therein by bolts (not shown).

In a sixth step K6, the drive gear 19 and driven gear 21 are respectively mounted on the support wall 98 and support member 104, via the bearings 110, 112, respectively, such that the drive gear 19 is connected by the connecting member 118 to the axial end portion of the power transmitting member 18, while the driven gear 21 is connected by the connecting member 120 to the axial end portion of the first intermediate shaft 40, and the fourth casing 12d is fixed to the third casing portion 12c, so as to cover the drive gear 19 and driven gear 21.

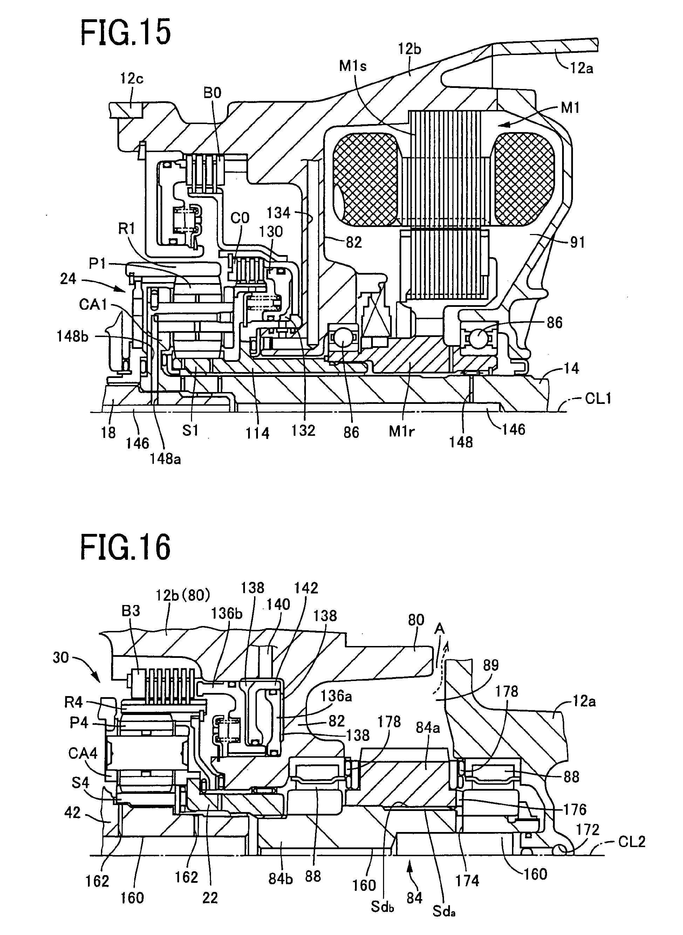

In the present vehicular drive apparatus 10, the support wall 82 of the second casing portion 12b has oil passages through which a pressurized working oil is supplied from a shift control valve (not shown) to the hydraulically operated differential limiting device in the form of the switching clutch C0 and switching brake B0, and to the frictional engaging devices in the form of the brakes B2, B3, etc. of the automatic transmission portion 20. Those oil passages include a clutch engaging oil passage 134 for supplying the working oil to an oil chamber 132 for advancing a piston 130 of the switching clutch C0, as shown in enlargement in Fig. 15.
The oil passages further include a brake engaging oil passage 140 for supplying the working oil to an oil chamber 138 for advancing first and second pistons 136a, 136b of the brake B3, as shown in enlargement in Fig. 16. In the oil chamber 138, the first and second pistons 136a, 136b are movable in abutting contact with each other. A stationary partition wall 142 is provided to divide a space between the first and second pistons 136a, 136b, into two parts, so that a hydraulic pressure acts on the back surface of the first piston 136a while an atmospheric pressure acts on the front surface of the second piston 136b. Accordingly, the pistons 136a, 136b are advanced by a large force based on a pressure-receiving surface which is two times the cross sectional surface area of the oil chamber 138.

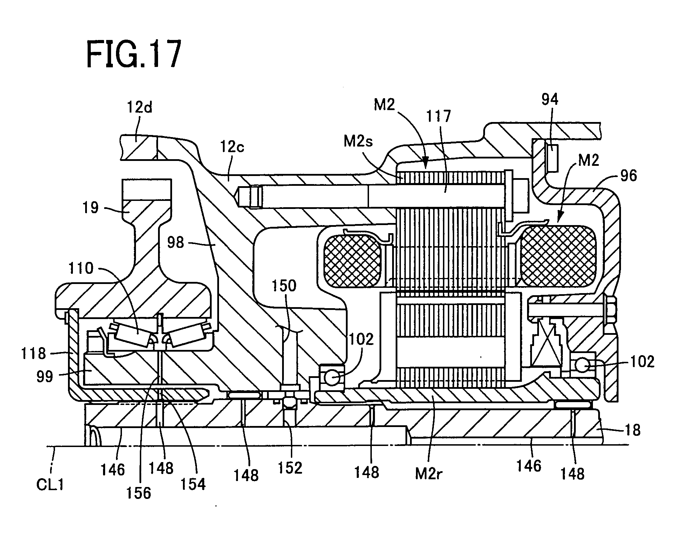

The support wall 98 of the third casing portion 12c and the support member 104 fitted in the third casing portion 12c have oil passages for supplying a lubricant to the bearing portions and meshing portions of the various rotary members of the vehicular drive apparatus 10. For example, the input rotary member 14 and the power transmitting member 18 coaxial with the first axis CL1 have an axial oil passage 146 formed to extend in parallel with the first axis CL1, and a plurality of radial oil passages 148 formed to extend in the radial directions, as shown in Figs. 11, 15 and 17, for introducing the lubricant to predetermined lubricating points.
The support wall 98 of the third casing portion 12c has a lubricant passage 150 which receives a lubricant delivered from a regulator valve (not shown), and the power transmitting member 18 has a lubricant inlet passage 152 formed in its radial direction in communication with the lubricant passage 150, at an axial position thereof opposed to the open end of the lubricant passage 150. The lubricant passage 150 and the lubricant inlet passage 152 are located between the bearing 110 of the drive gear 19, and one of the two bearings 115 of the rotor M2r of the second electric motor M2, which is located on one side of the rotor M2r remote from the engine 8.

The lubricant introduced through the lubricant passage 150 and lubricant inlet passage 152 is delivered through the axial oil passage 146 formed through the second input shaft in the form of the power transmitting member 18, in the opposite axial directions, to the first planetary gear set 24 and to the drive gear 19, so that the bearings 86, the carrier CA1 of the first planetary gear set 24, the bearings 110, and the needle bearings are lubricated by the lubricant delivered through the radial oil passages 148 communicating with the axial oil passage 146. To the bearings 110 supporting the drive gear 19, the lubricant is supplied through not only the radial passages 148, but also radial oil passages 154 formed through the connecting member 118 so as to extend in the radial directions, and radial oil passages 156 formed through the cylindrical projection 99 so as to extend in the radial directions.

The first planetary gear set 24 constituting a part of the differential mechanism is supported by the axial end portion of the power transmitting member 18 and the axial end portion of the input rotary member 14 which is fitted on the above-indicated axial end portion of the power transmitting member 18 such that the power transmitting member 18 and the input rotary member 14 are rotatable relative to each other. These axial end portions of the power transmitting member 18 and input rotary member 14 have respective radial passages 148a, 148b formed to extend in the radial direction, as shown in Fig. 15, so that the lubricant supplied from the axial oil passage 146 is delivered through the radial passages 148a, 148b to the first planetary gear set 24, in particular, to a portion between the carrier CA1 and pinion P1 on which a relatively large load acts.

The first intermediate shaft 40, second intermediate shaft 42, and shaft portion 84b of the differential drive gear 84 have an axial oil passage 160 formed to extend in parallel with the second axis CL2, and a plurality of radial oil passages 162 formed to extend in the radial directions, as shown in Figs. 12, 16 and 18, for introducing the working fluid to predetermined lubricating points. The support member 104 has a lubricant passage 164 through which the working oil delivered from a regulator valve (not shown) is supplied as the lubricant. The first intermediate shaft 40 has a plurality of radial lubricant inlet passages 166 in communication with the lubricant passage 164, at an axial position thereof opposed to the open end of the lubricant passage 164.

Accordingly, the pressurized working oil supplied to the axial passage 160 through the lubricant passage 164 and lubricant inlet passages 166 is delivered through the radial oil passages 162 to the bearings 112, second, third and fourth planetary gear sets 26, 28, 30 of the automatic transmission portion 20, frictional engaging devices C1, C2, B1, B2, B3 of the automatic transmission portion 20, bearings 88 and the bushings. To the bearings 112 supporting the driven gear 21, the lubricant is supplied through the radial oil passages 162, radial oil passages 168 formed through the connecting member 120 so as to extend in the radial directions, and radial oil passages 170 formed through the cylindrical projection 105 so as to extend in the radial directions.

As described above, the working oil is supplied from the lubricant passage 164 of the support member 104 to the axial passage 160 formed through the first and second intermediate shafts 40, 41, through the lubricant inlet passages 166 formed at an axially intermediate position of the first intermediate shaft 40. Accordingly, the working oil is delivered in the opposite axial directions to the driven gear 21 and to the automatic transmission portion 20, and the distances to the radial oil passages 162 provided at the lubricating points of the automatic transmission 20 are reduced, and the required cross sectional surface area of the axial passages 160 can be reduced.

The first casing portion 12a also has a lubricant passage 172 for supplying the working oil to the axial passage 160, so that the working oil is supplied through the lubricant passage 172 to a portion of the axial passage 160 within the shaft portion 84b of the differential drive gear 84, for lubricating the pair of bearings 88. The lubricant is delivered through the axial passage 160 to the teeth of the outer gear portion 84a of the differential drive gear 84 and to one of the two bearings 88 on the side of the driven gear 21, through a gap between the shaft portion 84b and the second intermediate shaft 42, and a gap between the output rotary member 22 and the shaft portion 84b which are splined to each other.
The lubricant is also delivered through the axial passage 160 to the other bearing 88 on the side of the engine 8 and the teeth of the outer gear portion 84a, through a radial oil passage 174 formed through the shaft portion 84b at an axial position thereof corresponding to that bearing 88, and a radial groove 176 formed in the end face of the outer gear portion 84a. Thus, the axial passage 160 is supplied with a sufficient amount of lubricant through the lubricant passage 172, radial passage 174 and radial groove 176, as well as through the lubricant passage 164 formed through the support member 104.

The inner circumferential surface of the outer gear portion 84a of the differential drive gear 84 has a splined axial portion Sda on the side remote from the automatic transmission portion 20. This splined axial portion Sda is splined to a splined axial portion Sdb of the outer circumferential surface of the shaft portion 84b, which is on the side remote from the automatic transmission portion 20. The other axial portion of the inner circumferential surface of the outer gear portion 84a which is on the side of the automatic transmission portion 20 is snugly fitted on the other axial portion of the outer circumferential surface of the shaft portion 84b which is on the side of the automatic transmission portion 20. Between the outer gear portion 84a and the pair of bearings 88, there are interposed a pair of thrust bearings 178, at predetermined axial positions, for receiving axial loads acting on the differential drive gear 84.

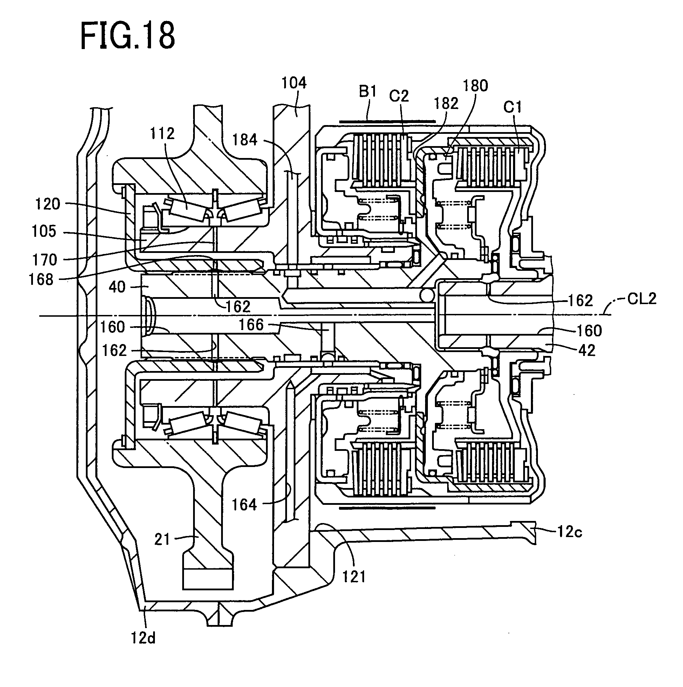

In the present vehicular drive apparatus 10, the input-side hydraulically operated frictional engaging devices in the form of the clutches C1 and C2 are supplied with the working fluid through oil passages formed through the support member 104 fitted in the third casing portion 12c. Those oil passages include a clutch engaging oil passage 184 for supplying the working oil to an oil chamber 192 for advancing a piston 180 of the clutch C1, as shown in enlargement in Fig. 18.

With the first embodiment, the drive apparatus 10 includes the power distributing mechanism (differential portion)16, through which drive power, applied to the input rotary member 14, is distributed to the first electric motor M1 and the power transmitting member 18, and the second electric motor M2 disposed in the power transmitting path between the power transmitting member 18 and the drive wheels 38a and 38b. In addition, the drive apparatus 10 includes the automatic transmission (transmission portion) 20 disposed between the power transmitting portion 18 and the drive wheels 38a and 38b. The first electric motor M1 and the power distributing mechanism (differential portion) 16 are disposed on the first axis CL1, forming the rotational axis of the input rotary member 14, in sequence from the input rotary member 14 and the automatic transmission (transmission portion) 20 is disposed on the second axis CL2 parallel to the first axis CL1.

The power transmitting member 18, acting as the rotary member located on the first axis CL1 at the end of the input rotary member 14 in a position opposite to the engine 8, and the first intermediate shaft (rotary member) 40, located on the second axis CL2 on the side in opposition to the input rotary member 14, are drivably connected to each other via the drive linkage 23 for power transmitting capability. As a result, the drive apparatus 10 is structured in the C-shape, i.e., the U-shape as a whole in a shortened axial dimension. This enables the drive apparatus to be downsized without increasing the number of parallel shafts, resulting in a simplified structure.

With the drive apparatus 10 of the first embodiment, furthermore, the second electric motor M2 is located on the first axis CL1 between the power distributing mechanism (differential portion) 16 and the drive linkage 23. This enables the component part placed on the first axis CL1, and the other component part placed on the second axis CL2, to be placed closer to each other in an axial dimension. This makes it possible to obtain a vehicular drive apparatus that is downsized as a whole.

With the drive apparatus 10 of the first embodiment, moreover, the drive linkage 23 includes the drive gear 19 placed on the first axis CL1, the driven gear 21 placed on the second axis CL2 in meshing engagement with the drive gear 19 for rotation. This minimizes the number of component parts for the drive linkage 23 to be formed.

In addition, the drive apparatus 10 of the first embodiment includes the switching brake B0 and the switching clutch C0 (hydraulically operated differential action limiting device) disposed on the first axis CL1 between the first electric motor M1 and the power distributing mechanism 16 or the first planetary gear unit 24. Accordingly, the power distributing mechanism 16 can be selectively switched between the differential state and the non-differential state to be selectively switched between the continuously variable running mode and the step-variable running mode. Moreover, this enables the lock mechanism for the first planetary gear set 24 to be formed in an easy layout with other oil passages.

With the drive apparatus 10 of the first embodiment, further, the first electric motor M I, the power distributing mechanism 16, the second electric motor M2, the power transmitting member 18 and the automatic transmission (transmission portion) 20 are located on the first axis, forming the rotational axis of the input rotary member 14, and the second axis CL2 parallel to the first axis. The automatic transmission portion 20, rotatable about the second axis CL2, is mounted on the first intermediate shaft 40, having the center portion formed with the longitudinal path 160 to introduce lubricating oil, and the second intermediate shaft 42 (rotary shaft). The support member (supporting member) 104, rotatably supporting the first and second intermediate shafts 40, 42, is formed with the lubricating oil passage 164 for supplying lubricating oil to the longitudinal path 160 formed in the first and second intermediate shafts 40, 42.

Thus, actuating oil is supplied from the lubricating oil passage 164, formed in the support member 104 with which the first and second intermediate shafts 40, 42 placed on the second axis CL2 are rotatably supported, to the longitudinal path 160 extending through the first and second intermediate shafts 40, 42. Accordingly, this allows the first and second intermediate shafts 40, 42 to have an area supplied with actuating oil, and another area supplied with lubricating oil in a shorter distance than that of a case wherein lubricating oil is supplied from an axial end of a rotary shaft. This enables an area, needed to have lubrication, of the transmission portion to be adequately lubricated without increasing the first and second intermediate shafts 40, 42 in size.

With the drive apparatus 10 of the first embodiment, furthermore, the longitudinal path 160 extends through the first and second intermediate shafts 40, 42 to the lubricating area of the automatic transmission portion 20. This makes it possible to lubricate the area, needed for lubrication, in a simplified structure without causing the drive apparatus 10 to become complicated in an internal structure.

With the drive apparatus 10 of the first embodiment, moreover, the drive linkage 23 includes the drive gear 19 connected to the power transmitting member 18 on the first axis CL1, and the driven gear 21 connected to the first intermediate shaft 40 on the second axis CL2 to transfer drive power from the power transmitting member 18 to the first intermediate shaft 40. The longitudinal path 160, formed in the first intermediate shaft 40, is elongated to the driven gear 21. Accordingly, actuating oil is admitted to the lubricating oil passage 164 formed in the support member 104, and supplied to the longitudinal path 160 of the first intermediate shaft 40. Meanwhile, the lubricating oil passage 164 has a lubricating oil a supply site, at which actuating oils is distributed in the longitudinal path 160 to the driven gear 21 and the automatic transmission portion 20 in two directions. Therefore, the driven gear 21 and the automatic transmission portion 20 can be adequately lubricated without increasing a size of the rotary shaft for lubrication.

With the drive apparatus 10 of the first embodiment, further, the housing 12 rotatably supports the shaft portion 84b of the differential drive gear 84, through which the final speed reducer 36 is drivably rotated, in an area at an end portion of the second axis CL2. The lubricating oil passage 172, separately formed in the housing 12, allows lubricating oil to be supplied to the differential drive gear 160 through the longitudinal path 160 extending through the shaft portion 84b. Thus, the differential drive gear 84, bearing increased load, can be supplied with a large volume of lubricating oil at an adequate flow rate.

With the drive apparatus 10 of the first embodiment, furthermore, the planetary gear type automatic transmission, acting as the automatic transmission portion 20, includes the hydraulically operated frictional engaging device. The support member 104, rotatably supporting the first and second intermediate shafts 40, 42, has a clutch engaging oil passage 184 from which a clutch engaging pressure is supplied to hydraulically operated frictional engaging device C1 or C2 directly or through the first intermediate shaft 40. Accordingly, no need arises for the automatic transmission portion 20 to have a dedicated wall for the clutch engaging pressure to be supplied to the hydraulically operated frictional engaging device C1 or C2, enabling the vehicular drive apparatus 10 to be downsized by that extent.

With the drive apparatus 10 of the first embodiment, moreover, the power transmitting member 18 is located on the first axis CL1 acting as the rotational axis of the input rotary member 14. In addition, the differential drive gear 84 is located on the second axis CL2 parallel to the first axis CL1 for drivably rotating the automatic transmission (transmission portion) 20 and the final speed reducer 36. The automatic transmission portion 20 has the output rotary member 22 spline coupled to the differential drive gear 84. Accordingly, the pair of first and second casing portions 12a and 12b can be assembled to each other with the differential drive gear 84 being rotatably supported. Subsequently, the output rotary member 22 of the automatic transmission portion 20 can be spline-coupled to the differential drive gear 84 with incapability of rotating relative to each other, thereby providing an ease of assembling. That is, the automatic transmission portion 20 can be assembled independently of the differential drive gear 84 in advance or on a subsequent stage, enabling easy assembling to be performed.

With the drive apparatus 10 of the first embodiment, besides, the housing 12, accommodating various component parts disposed on the first axis CL1 and the second axis CL2, have the casing portions 12a and 12b that rotatably support the both ends of the differential drive gear 84. This allows the pair of first and second casing portions 12a and 12b, rotatably supporting the differential drive gear 84, to be assembled to each other with the differential drive gear 84 being rotatably supported. Thereafter, the output rotary member 22 of the automatic transmission portion 20 can be spline-coupled to the differential drive gear 84 with incapability of rotating relative to each other. This allows the drive apparatus 10 to be easily assembled.

With the drive apparatus 10 of the first embodiment, in addition, the pair of thrust bearings 178 are disposed between the differential drive gear 84 and the first and second casing portions 12a and 12b. Accordingly, even if a load occurs on the differential drive gear 84, acting as the helical gear that transmits relatively large torque, in a thrust direction, the differential drive gear 84 can be rotatably supported with the thrust bearings 178.

With the drive apparatus 10 of the first embodiment, further, the differential drive gear 84 has the shaft portion 84b, whose both ends are rotatably supported with the first and second casing portions 12a, 12b by means of the pair of thrust bearings 88. The shaft portion 84b has one end portion spline-coupled to the output rotary member 22. In addition, the outer circumferential gear portion 84a has the inner circumferential periphery spline-coupled to the outer circumferential periphery of the shaft portion 84b. The pair of thrust bearings 178 are disposed between the both end surfaces of the outer circumferential gear portion 84a and the first and second casing portions 12a, 12b. This allows the relatively large differential drive gear 84 to be easily machined and fabricated.

With the drive apparatus 10 of the first embodiment, furthermore, the outer circumferential gear portion 84a and the shaft portion 84b, forming the differential drive gear 84, are spline-coupled to each other in partial areas on the same axis and held in surface contact with each other in other partial areas. Accordingly, the inner circumferential periphery of the outer circumferential gear portion 84a and the outer circumferential periphery of the shaft portion 84b, held in mating engagement with each other under the surface contact, bear a radiated load occurring when applied with relatively large torque. That is, the outer circumferential gear portion 84a and the shaft portion 84b have the other partial areas, remained out of spline engagement, which can bear the load.

With the drive apparatus 10 of the first embodiment, moreover, the power transmitting member 18 is located on the first axis CL1, forming the rotational axis of the input rotary member 14, and the automatic transmission (transmission portion) 20 is located on the second axis CL2 parallel to the first axis CL1. The automatic transmission portion 20 includes the first intermediate shaft (input shaft) 40 and the output rotary member 22, rotatable relative to each other, which are disposed on the second axis CL2 in series. The first intermediate shaft (input shaft) 40 and the output rotary member 22 are rotatably supported with the support member (supporting member) 104 and the support wall (supporting member) 82. Thus, no support member is needed in an intermediate area of the automatic transmission portion 20 in the axial direction thereof. This results in a reduction in axial dimension, thereby enabling a vehicular drive apparatus to be downsized. That is, the automatic transmission portion 20 has no need to have a support member that directly supports the second intermediate shaft 42 located in the intermediate area of the automatic transmission portion 20, achieving a reduction in axial dimension.

With the drive apparatus 10 of the first embodiment, in addition, the automatic transmission portion 20 includes the first intermediate shaft (input shaft) 40, the second intermediate shaft 42 and the output rotary member 22 disposed on the second axis CL2 in series to be rotatable relative to each other. The second intermediate shaft 42 is provided with both ends or end portions rotatably supported with the first intermediate shaft 40 and the output rotary member 22. Thus, no need arises for the intermediate shaft 42, located in the intermediate area of the automatic transmission portion 20, to have a support wall or a support member, achieving a reduction in axial dimension to downsize a vehicular drive apparatus.

With the drive apparatus 10 of the first embodiment, besides, the clearance (communicating aperture) A is formed in and extends through the partition wall 80 disposed between a first accommodating compartment 91, serving as the airspace for accommodating the first electric motor M1, and a fifth accommodation compartment 89 acting as the airspace for accommodating the differential drive gear 84. This allows lubricating oil, supplied to the differential drive gear 84 for lubricating the same, to flow from the airspace accommodating the differential drive gear 84 to the airspace, accommodating the first electric motor M1, via the clearance (communicating aperture) A in a direction as indicated by a dotted line shown in Fig. 16. Accordingly, the first electric motor M1 is also cooled with lubricating oil passing through the clearance (communicating aperture) A, providing increased in cooling capability.

With the drive apparatus 10 of the first embodiment, further, the lid-shaped casing portion 12a covers the first electric motor M1 and the differential drive gear 84 in areas facing the engine 8. The cylindrical second casing portion 12b is disposed adjacent to the first casing portion 12a to form the airspace for accommodating the first electric motor M1 and the differential drive gear 84 with the first casing portion 12a. The second casing portion 12b includes the partition wall 80 partitioning a fifth accommodation compartment 89, serving as an airspace for accommodating the differential drive gear 84, and the first accommodation compartment 91 acting as the airspace in which the first electric motor M1 is located. The slight clearance A, formed between the partitioning wall 80 and the first casing portion 12a, functions as the communicating aperture. Accordingly, this allows the first and second casing portions 12a, 12b to be merely assembled for thereby substantially providing the communicating aperture with an advantageous effect in contrast to a case of forming a communicating aperture on the partition wall 80 by mechanical machining such as cutting with a drill or the like.

With the drive apparatus 10 of the first embodiment, furthermore, the second axis CL2 is installed on the vehicle in an area above the first axis CL1. Accordingly, lubricating oil, supplied to the differential drive gear 84 for lubricating the same, runs down from the airspace, accommodating the differential drive gear 84, to the airspace for accommodating the first electric motor M1 via the clearance (communicating aperture) A as indicated by the dotted line in Fig. 16 by gravity. This allows lubricating oil to flow through the clearance (communicating aperture) A at an increased flow rate, allowing the first electric motor M1 to have further increased cooling capability.

With the drive apparatus 10 of the first embodiment, moreover, the third cylindrical casing portion 12c rotatably supports the power transmitting member (second input shaft) 18 so as to covers an outer circumferential area thereof. The third cylindrical casing portion 12c is formed with the lubricating oil passage 150 through which lubricating oil is supplied to the longitudinal oil path 146 formed in the power transmitting member 18. As a result, lubricating oil can be directly supplied from the third casing portion 12c to the longitudinal path 146 of the power transmitting member 18. Thus, no need arises for the rear cover, located on the housing 12 at the end thereof, to have a complicated oil passage structure, providing a simplified oil passage structure for supplying lubricating oil to the rotary shaft on the input side placed on the first axis CL1.

In addition, the drive apparatus 10 of the first embodiment includes the second electric motor M2, through which the power transmitting member (second input shaft) 18 extends, a pair of support walls 96, 98 radially extending inward from the third casing portion 12c for rotatably supporting the rotor M2r, and the drive gear 19 rotatably supported with the support wall 98, placed in opposition to the engine (drive source) 8, in an area opposite to the second electric motor M2. The lubricating oil passage 150 is formed in the support wall 98 in an area between a support area for the rotor M2r and a support area for the drive gear 19. This allows lubricating oil to be supplied to the longitudinal oil passage 146 of the power transmitting member (second input shaft) 18 at an intermediate portion thereof. This enables the longitudinal oil passage 146 to have a smaller flow cross-sectional surface area than that of an oil passage through which lubricating oil is supplied from an axial end.

With the drive apparatus 10 of the first embodiment, besides, the first electric motor M1 is provided in an outer circumferential area around the input rotary member (first input shaft) 14. This allows lubricating oil to be supplied to the support area of the input rotary member 14 for the first electric motor M1 via the longitudinal oil passage 146.
With the drive apparatus 10 of the first embodiment, further, the first planetary gear set 24, provided in the outer circumferential area around the input rotary member (first input shaft) 14, can be supplied with lubricating oil via the longitudinal oil passage 146 of the input rotary member 14.

With the drive apparatus 10 of the first embodiment, furthermore, the switching brake B0 and the switching clutch C0 (differential action limiting device) for limiting a differential action of the first planetary gear set (differential mechanism) 24 are provided in the outer circumferential area round the input rotary member (first input shaft) 14. Therefore, lubricating oil can be supplied to the switching brake B0 and the switching clutch C0 via the longitudinal oil passage 146 of the input rotary member 14.

With the drive apparatus 10 of the first embodiment, moreover, the power transmitting member (second input shaft) 18 has the axial end portion held in mating engagement with the input rotary member (first input shaft) 14 at an axial end thereof to be rotatable relative to each other. This allows lubricating oil to be supplied from the longitudinal oil passage 146 of the power transmitting member 18 to the longitudinal oil passage 146 of the input rotary member 14 in fluid communication therewith.

With the drive apparatus 10 of the first embodiment, in addition, the axial end portion of the power transmitting member (second input shaft) 18 and the axial end portion of the input rotary member (first input shaft) 14 have radiated oil passages 148a, 148b, respectively, which are held in fluid communication with each other in a radial direction. This allows lubricating oil to be supplied to the first planetary gear set (differential mechanism) 24 via the radiated oil passages 148a, 148b at an adequate flow rate.

With the drive apparatus 10 of the first embodiment, besides, the longitudinal oil passage 146 of the power transmitting member (second input shaft) 18 is axially elongated to the lubricating area of the drive gear 19. The lubricating oil passage 150, formed in the third casing portion 12c, allows a flow of lubricating oil, to be supplied to the longitudinal oil passage 146, from which the flow of lubricating oil is bifurcated in two currents one for the drive gear 19 and the other for the first planetary gear set (differential mechanism) 24. This allows lubricating oil to be supplied to the drive gear 19 and the first planetary gear set 24, needed for lubrication with relatively large amounts of lubricating oil, at adequate flow rates through the longitudinal oil passage 146 of the power transmitting member 18 even formed in a relatively small cross-sectional flow surface area.

### <Embodiment 2>

There will be described other embodiments of the present invention. In the following description of the other embodiments, the same reference signs as used in the first embodiment will be used to identify the functionally identical elements, redundant description of which is omitted.

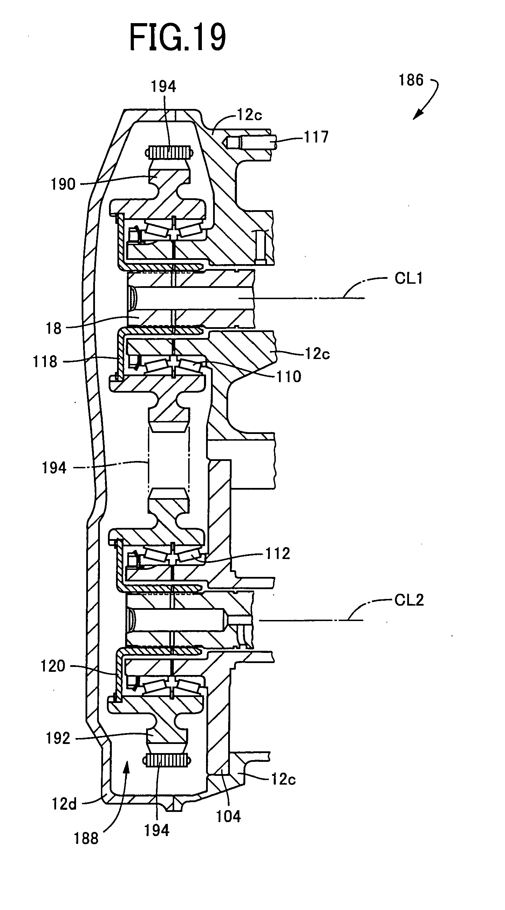

Referring to the fragmentary cross sectional view of Fig. 19, there is shown a part of a vehicular drive apparatus 186 according to the second embodiment of this invention. This drive apparatus 186 is different from the drive apparatus 10 of the first embodiment, only in that a drive linkage 188 is provided in place of the drive linkage 23. As shown in Fig. 19, the drive linkage 188 includes a drive sprocket 190, a driven sprocket 192, and a connecting belt 194 which is formed of a metal or resin and which connects the drive and driven sprockets 190, 192. The drive sprocket 190 is mounted on the axial end portion of the power transmitting member 18 through the connecting member 118 such that the drive sprocket 190 and the power transmitting member 18 are rotated as a unit about the first axis CL1. The second sprocket 192 is mounted on the axial end portion of the first intermediate shaft 40 through the connecting member 120 such that the driven sprocket 192 and the first intermediate shaft 40 are rotated as a unit about the second axis CL2. Thus, the drive linkage 188 is arranged to transmit a drive force from the power transmitting member 18 to the first intermediate shaft 40 such that the first intermediate shaft 40 is rotated in the same direction as the power transmitting member 18. The present second embodiment has substantially the same advantages as the preceding embodiments.

With the drive apparatus 186 of the second embodiment, further, the drive linkage 188 includes the driving sprocket 190 disposed on the first axis CL1, the driven sprocket 192 disposed on the second axis CL2, and the power transmitting belt (power transmitting member) 194 tensioned on the driving sprocket 190 and the driven sprocket 192. This enables the driving sprocket 190 and the driven sprocket 192 to be determined in smaller diameters regardless of a distance between the first and second axes CL1 and CL2, obtaining a vehicular drive apparatus that is downsized and lightweight.

### <Embodiment 3>

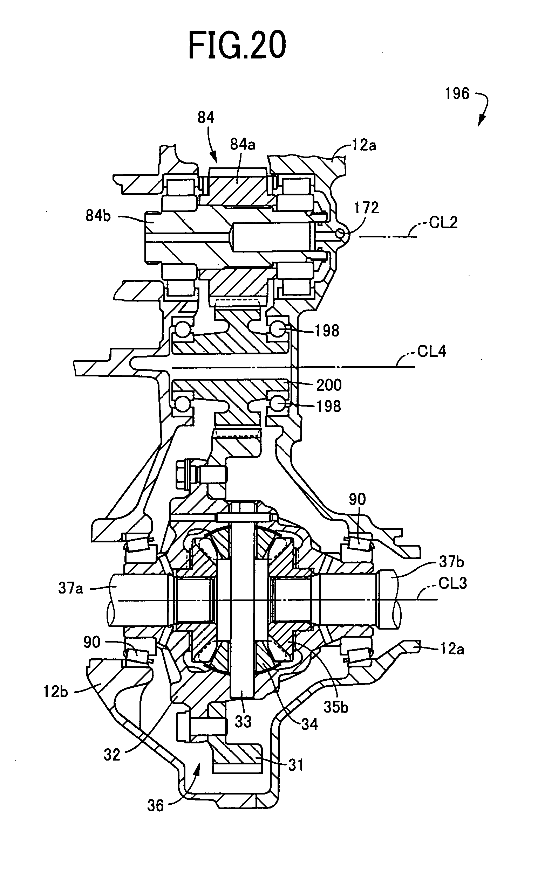

Referring next to the fragmentary cross sectional view of fig. 20, there is shown a part of a vehicular drive apparatus 196 according to the third embodiment of the invention. This drive apparatus 196 is different from the drive apparatus 10 of the first embodiment, in that the axial position of the engine 8 is opposite to that in the first embodiment, and in that an idler gear 200 is interposed between the differential drive gear 84 and the large-diameter gear 31 of the final reduction gear device 36. The idler gear 200 is rotatably supported by the first and second casing portions 12a, 12b, via bearings 198. In the present third embodiment, a fourth axis CL4 is provided between and in parallel to the second and third axes CL2, CL3, and the idler gear 200 is supported rotatably about the fourth axis CL4, in meshing engagement with the differential drive gear 84 and the large-diameter gear 31 of the final reduction gear device 36. The idler gear 200 transmits a rotary motion from the differential drive gear 84 to the large-diameter gear 31, without a speed change of the rotary motion. The present third embodiment has substantially the same advantages as the preceding embodiments.

With the drive apparatus 196 of the third embodiment, in addition, the idler gear (rotary member) 200 is disposed to be rotatable about the fourth axis CL4 parallel to the first and second axes CL1 and CL2 and the final speed reducer 36 is disposed to be rotatable about the third axis CL3 parallel to the first and second axes CL1 and CL2. Drive power, output from the automatic transmission portion 20 disposed on the second axis CL2, is transferred through the differential drive gear 84 and the idler gear 200 rotatable about the fourth axis CL4, enabling the final speed reducer 36 to be placed in a relatively free layout.

In addition, with the differential drive gear 84 and the final speed reducer 36 kept in meshing engagement with each other by means of the idler gear 200, the differential drive gear 84, placed on the second axis CL2, and the final speed reducer 36, placed on the this axis CL3, rotate in the same direction. This allows a common use of the drive linkage 188 comprised of the pair of driving sprocket (rotary member) 190 and the driven sprocket (rotary member) 192 between which the power transmitting belt 199 is tensioned. Thus, the drive apparatus 196 of the third embodiment has an advantageous effect of having the input rotary member 14 and the final sped reducer 36 rotatable in the same direction like the drive apparatus 10 of the first embodiment.

### <Embodiment 4>

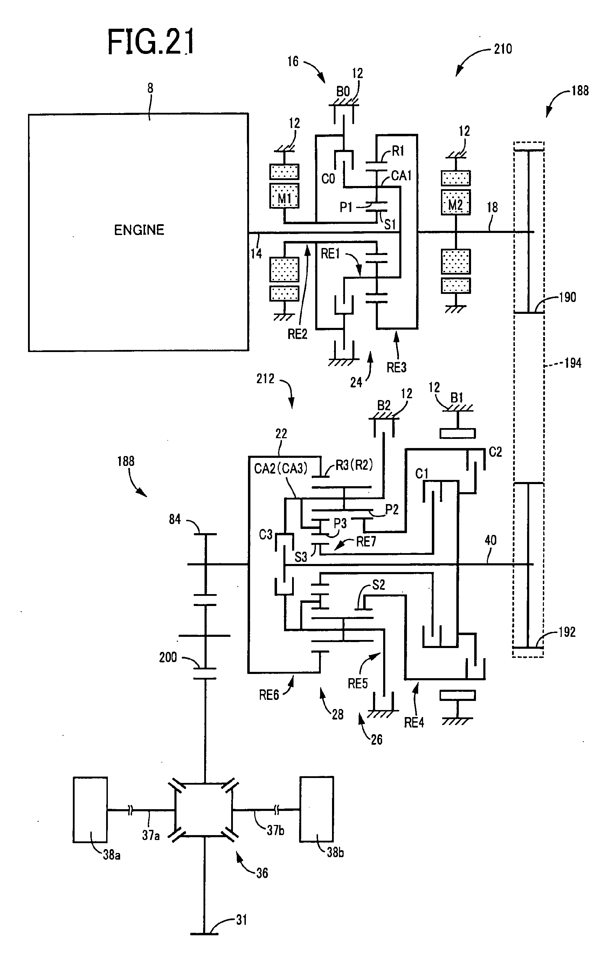

Referring to the schematic view of Fig. 21, there is shown an arrangement of a vehicular drive apparatus 210 according to the fourth embodiment of this invention, which includes an automatic transmission portion 212, and which is accommodated within the housing 12, as in the preceding embodiments. This drive apparatus 210 is different from the drive apparatus 10 of the first embodiment of Fig. 1, in that the drive linkage 188 is provided in place of the drive linkage 23, as in the second embodiment, while the idler gear 200 is interposed between the differential drive gear 84 and the large-diameter gear 31 of the final reduction gear device 36, as in the third embodiment, and in that the automatic transmission portion 212 of Ravigneaux type including two planetary gear sets 26, 28 is provided in place of the automatic transmission portion 20.

The automatic transmission portion 212 includes a single-pinion type second planetary gear set 26, and a single-pinion type third planetary gear set 28. The third planetary gear set 28 has: a third sun gear S3; a plurality of mutually meshing third planetary gears P3; a third carrier CA3 supporting the third planetary gears P3 such that each of the third planetary gears P3 is rotatable about its axis and about the axis of the third sun gear S3; and a third ring gear R3 meshing with the third sun gear S3 through the third planetary gears P3. For example, the third planetary gear set 28 has a gear ratio p3 of about 0.315.
The second planetary gear set 26 has: a second sun gear S2; a second planetary gear P2 formed integrally with one of the third planetary gears P3; a second carrier CA2 formed integrally with the third carrier CA3; and a second ring gear R2 formed integrally with the third ring gear R3 and meshing with the second sun gear S2 through the second planetary gear P2. For example, the second planetary gear set 26 has a gear ratio p2 of about 0.368. The automatic transmission portion 212 is of the Ravigneaux type in which the second and third carriers CA2, CA3 are integral with each other, while the second and third ring gears R2, R3 are integral with each other.

The diameter or number of teeth of the second planetary gear P2 which is integral with one of the third planetary gears P3 may be different with that of the third planetary gear P3. The second planetary gear P2 may be formed separately from the third planetary gears P3. Similarly, the second carrier CA2 and the second ring gear R2 may be formed separately from the respective third carrier CA3 and ring gear R3. Where the numbers of teeth of the second sun gear S2, second ring gear R2, third sun gear S3 and third ring gear R3 are represented by ZS2, ZR2, ZS3 and ZR3, respectively, the above-indicated gear ratios p2 and p3 are represented by ZS2/ZR2 and ZS3/ZR3, respectively.

In the automatic transmission portion 212, the second sun gear S2 is selectively connected to the first intermediate shaft 40 through the second clutch C2, and selectively fixed to the housing 12 through the first brake B1. The second carrier CA2 and the third carrier CA3 are selectively connected to the first intermediate shaft 40 through the third clutch C3, and selectively fixed to the housing 12 through the second brake B2, while the second ring gear R2 and the third ring gear R3 are fixed to the output rotary member 22. The third sun gear S3 is selectively connected to the first intermediate shaft 40 through the first clutch C1. The present fourth embodiment has substantially the same advantages as the preceding embodiments.

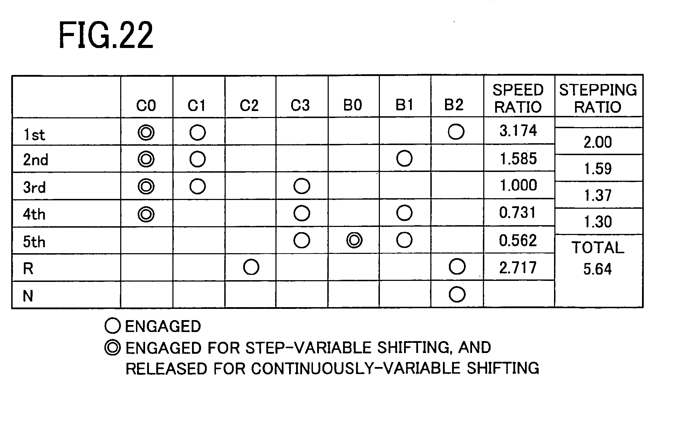

In the vehicular drive apparatus 210 constructed as described above, one of a first gear position (first speed position) through a fifth gear position (fifth speed position), a reverse gear position (rear drive position) and a neural position is selectively established by engaging actions of a corresponding combination of the frictional engaging devices selected from the above-described switching clutch C0, first clutch C1, second clutch C2, third clutch C3, switching brake B0, first brake B1 and second brake B2, as indicated in the table of Fig. 22. In the present embodiment, too, the power distributing mechanism 16 is provided with the switching clutch C0 and brake B0, so that the power distributing mechanism 16 can be selectively placed by engagement of the switching clutch C0 or switching brake B0, in the fixed-speed-ratio shifting state in which the power distributing mechanism 16 is operable as a transmission having a single gear position with one speed ratio or a plurality of gear positions with respective speed ratios, as well as in the continuously-variable shifting state in which the power distributing mechanism 16 is operable as a continuously variable transmission, as described above.

In the present vehicular drive apparatus 210, therefore, a step-variable transmission is constituted by the automatic transmission portion 212, and the power distributing mechanism 16 which is placed in the fixed-speed-ratio shifting state by engagement of the switching clutch C0 or switching brake B0, and a continuously variable transmission is constituted by the automatic transmission portion 212, and the power distributing mechanism 16 which is placed in the continuously-variable shifting state, with none of the switching clutch C0 and brake B0 being engaged.

### <Embodiment 5>

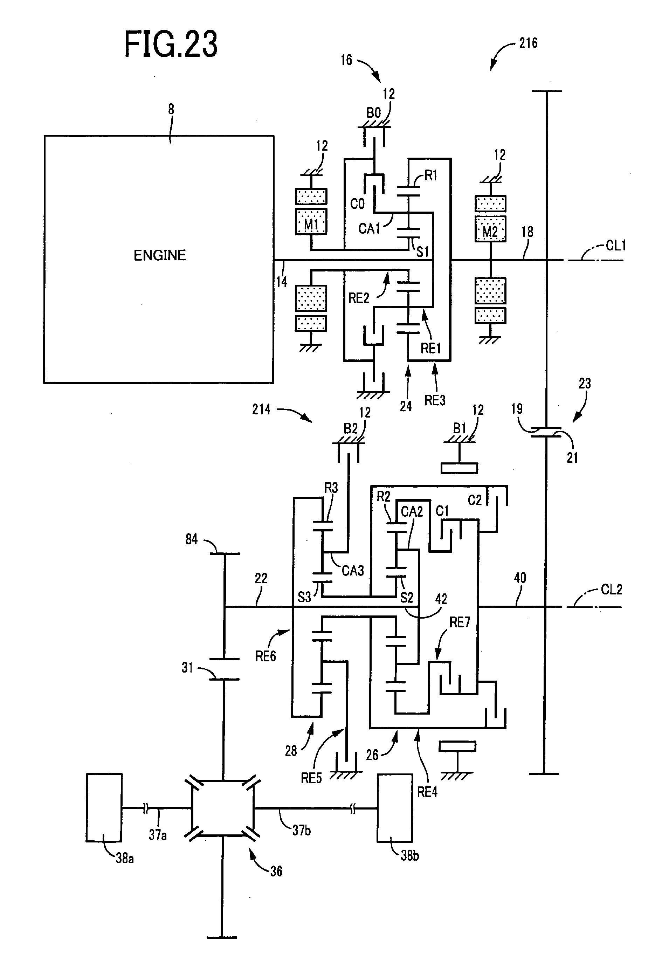

Referring to the schematic view of Fig. 23, there is shown an arrangement of a vehicular drive apparatus 216 according to the fifth embodiment of this invention, which includes an automatic transmission portion 214, and which is accommodated within the housing 12, as in the preceding embodiments. This drive apparatus 216 is different from the drive apparatus 10 of the first embodiment, in that the axial position of the engine 8 is opposite to that in the first embodiment, and the automatic transmission portion 214 is provided in place of the automatic transmission portion 20.

The automatic transmission portion 214 includes a single-pinion type second planetary gear set 26 having a gear ratio p2 of about 0.532, and a single-pinion type third planetary gear set 28 having a gear ratio p3 of about 0.418. The second sun gear S2 of the second planetary gear set 26 and the third sun gear S3 of the third planetary gear set 28 are formed integrally with each other, selectively connected to the first intermediate shaft 40 through the second clutch C2, and selectively fixed to the housing 12 through the first brake B1. The second carrier CA2 of the second planetary gear set 26 and the third ring gear R3 of the third planetary gear set 28 are formed integrally with each other, and fixed to the output rotary member 22. The second ring gear R2 is selectively connected to the first intermediate shaft 40 through the first clutch C1, and the third carrier CA3 is selectively fixed to the housing 12 through the second brake B2.

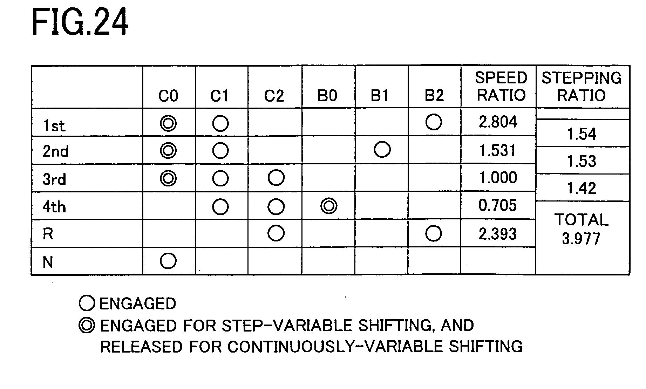

In the vehicular drive apparatus 216 constructed as described above, one of a first gear position (first speed position) through a fourth gear position (fourth speed position), a reverse gear position (rear drive position) and a neural position is selectively established by engaging actions of a corresponding combination of the frictional engaging devices selected from the above-described switching clutch C0, first clutch C1, second clutch C2, switching brake B0, first brake B1 and second brake B2, as indicated in the table of Fig. 24. Those gear positions have respective speed ratios γ (input shaft speed N_{IN}/output shaft speed N_{OUT}) which change as geometric series.

In the present embodiment, too, the power distributing mechanism 16 is provided with the switching clutch C0 and brake B0, so that the power distributing mechanism 16 can be selectively placed by engagement of the switching clutch C0 or switching brake B0, in the fixed-speed-ratio shifting state in which the power distributing mechanism 16 is operable as a transmission having a single gear position with one speed ratio or a plurality of gear positions with respective speed ratios, as well as in the continuously-variable shifting state in which the power distributing mechanism 16 is operable as a continuously variable transmission, as described above.

### <Embodiment 6>

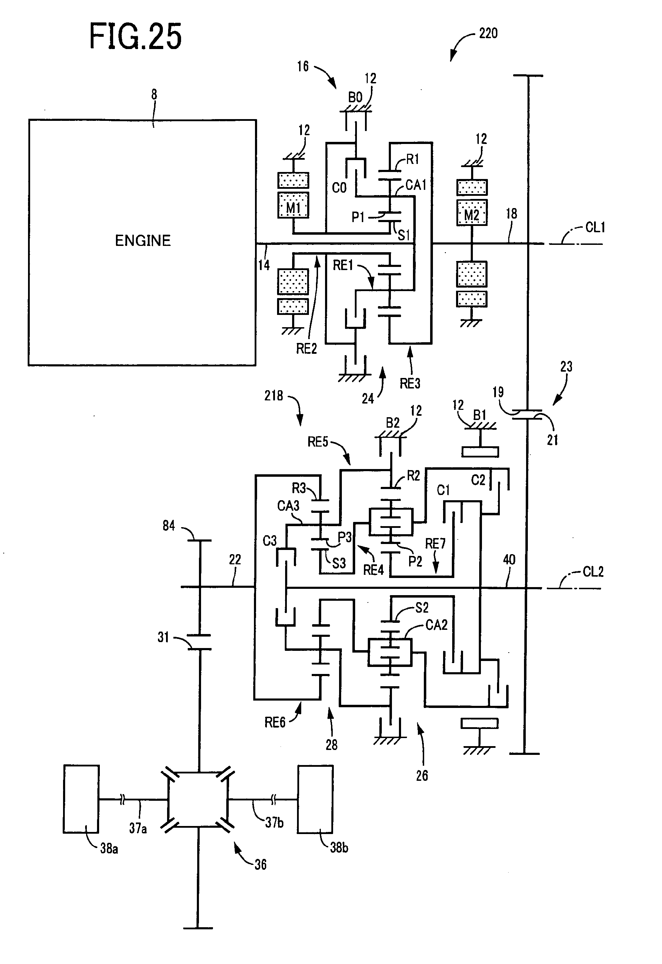

Referring to the schematic view of Fig. 25, there is shown an arrangement of a vehicular drive apparatus 220 according to the fifth embodiment of this invention, which includes an automatic transmission portion 218, and which is accommodated within the housing 12, as in the preceding embodiments. This drive apparatus 220 is different from the drive apparatus 210 of the fourth embodiment of Fig. 21, in that the automatic transmission portion 218 is provided in place of the automatic transmission portion 212, and the drive linkage 23 is provided in place of the drive linkage 188, while the idler gear 200 is not provided.

The automatic transmission portion 218 includes a double-pinion type second planetary gear set 26, and a single-pinion type third planetary gear set 28. The second planetary gear set 26 has: a second sun gear S2; a plurality of mutually meshing second planetary gears P2; a second carrier CA2 supporting the second planetary gears P2 such that each of the second planetary gears P2 is rotatable about its axis and about the axis of the second sun gear S2; and a second ring gear R2 meshing with the second sun gear S2 through the second planetary gears P2. For example, the second planetary gear set 26 has a gear ratio p2 of about 0.461. The third planetary gear set 28 has: a third sun gear S3; a third planetary gear P3; a third carrier CA3 supporting the third planetary gear P3 such that the third planetary gear P3 is rotatable about its axis and about the axis of the third sun gear S3; and a third ring gear R3 meshing with the third sun gear S3 through the third planetary gear P3. For example, the third planetary gear set 28 has a gear ratio p3 of about 0.368.

The automatic transmission portion 218 is provide with the first and second brakes B1, B2 and the first, second and third clutches C1-C3. The second sun gear S2 is selectively connected to the power transmitting member 18 through the first clutch C1, and the second carrier CA2 and the third sun gear S3 are formed integrally with each other, selectively connected to the first intermediate shaft 40 through the second clutch C2, and selectively fixed to the housing 12 through the first brake B1. The second ring gear R2 and the third carrier CA3 are formed integrally with each other, selectively connected to the first intermediate shaft 40 through the third clutch C3, and fixed to the housing 12 through the second brake B2, while the third ring gear R3 is fixed to the output rotary member 22.
In the present sixth embodiment, the shifting actions of the automatic transmission portion 218 are performed as indicated in the table of Fig. 22 used in the fourth embodiment. The present sixth embodiment has substantially the same advantages as the preceding embodiments.

While the preferred embodiments of this invention have been described above by reference to the accompanying drawings, for illustrative purpose only, it is to be understood that the present invention may be embodied with various changes and modifications, as described below.
In the vehicular drive apparatus 10, etc. of the illustrated embodiments, the power distributing mechanism 16 is placed selectively in one of its differential state and non-differential state, so that the drive apparatus 10 is switchable between the continuously-variable shifting state in which the drive apparatus is operable as an electrically controlled continuously-variable transmission, and the step-variable shifting state in which the drive apparatus is operable as a step-variable transmission. However, the switching between the continuously variable shifting state and the step-variable shifting state is one form of the switching between the differential state and the non-differential state of the power distributing mechanism 16. For instance, the power distributing mechanism 16 may be operated as a step-variable transmission the speed ratio of which is variable in steps, even while the power distributing mechanism 16 is placed in the differential state.

In the power distributing mechanism 16 in the illustrated embodiments, the first carrier CA1 is fixed to the engine 8, and the first sun gear S1 is fixed to the first electric motor M1 while the first ring gear R1 is fixed to the power transmitting member 18. However, this arrangement is not essential. The engine 8, first electric motor M1 and power transmitting member 18 may be fixed to any other elements selected from the three elements CA1, S1 and R1 of the first planetary gear set 24.
While the engine 8 is directly fixed to the input rotary shaft 14 in the illustrated embodiments, the engine 8 may be operatively connected to the input rotary shaft 14 through any suitable member such as gears and a belt, and need not be disposed coaxially with the input rotary shaft 14.

Although the power distributing mechanism 16 in the illustrated embodiments is provided with the switching clutch C0 and the switching brake B0, the power distributing mechanism 16 need not be provided with both of the switching clutch C0 and brake B0. While the switching clutch C0 is provided to selectively connect the first sun gear S 1 and the first carrier CA1 to each other, the switching clutch C0 may be provided to selectively connect the first sun gear S 1 and the first ring gear R1 to each other, or selectively connect the first carrier CA1 and the first ring gear R1. Namely, the switching clutch C0 may be arranged to connect any two elements of the three elements of the first planetary gear set 24.
While the switching clutch C0 is engaged to establish the neutral position N in the drive apparatus 10 etc. of the illustrated embodiments, the switching clutch C0 need not be engaged to establish the neutral position.
The frictional engaging devices used as the switching clutch C0, switching brake B0, etc. in the illustrated embodiments may be replaced by a engaging device of a magnetic-power type, an electromagnetic type or a mechanical type, such as a powder clutch (magnetic powder clutch), an electromagnetic clutch and a meshing type dog clutch.

Each of the drive apparatus 10 etc. according to the illustrated embodiments is a drive apparatus for a hybrid vehicle in which the drive wheels 38a and 38b can be driven by not only the engine 8 but also the first electric motor or the second electric motor M2. However, the principle of the present invention is applicable to a vehicular drive apparatus in which the power distributing mechanism 16 is not operable in a hybrid control mode, and functions only as a continuously variable transmission so-called an "electric CVT".
While the power distributing mechanism 16 is constituted by one planetary gear set in the illustrated embodiments, the power distributing mechanism 16 may be constituted by two or more planetary gear sets. In this case, the power distributing mechanism 16 functions as a transmission having three or more gear positions in the fixed-speed-ratio shifting state.

In the illustrated embodiments, the automatic transmission portion 20 includes the three planetary gear sets 26, 28 and 30. However, the automatic transmission portion 20 may be replaced by a speed reducing mechanism including one planetary gear set, as disclosed in the previously identified Patent Document, and may include four or more planetary gear sets. Namely, the construction of the automatic transmission is not limited to the details of the illustrated embodiments, in the number of the planetary gear sets, the number of the gear positions, and the selective connections of the clutches C and brakes B to the elements of the planetary gear sets.
The vehicular drive apparatus of Figs. 1, 21, 23 and 25 may be modified such that the second electric motor M2 is disposed on one axial side of the drive gear 19 which is remote from the first planetary gear set 24, and/or such that the first clutch C1 is disposed on one axial side of the driven gear 21 which is remote from the second planetary gear set 26.

Although the support walls 82, 98 in the illustrated embodiments are formed integrally with the housing 12, these support walls may be formed separately from the housing 12 and fixed to the housing 12. Conversely, the support wall 96 formed separately from the housing 12 and fixed to the housing 12 may be formed integrally with the housing 12.
The second electric motor M2 may be disposed at any position in the power transmitting path between the power transmitting member 18 and the drive wheels 38, and may be operatively connected to the power transmitting path, either directly, or indirectly via a belt, gears, a speed reducing device, etc.
It is to be understood that the embodiments described above are given for illustrating the present invention and that the invention may be embodied with various other changes and modifications which may occur to those skilled in the art.

## Claims

1. A vehicular drive apparatus, having a differential portion for distributing a drive power input to an input rotary member to a first electric motor and a power transmitting member, and a second electric motor disposed in a power transmitting path between the power transmitting member and drive wheels, comprising:
a transmission portion disposed between the power transmitting member and the drive wheels;
the input rotary member, the first electric motor and the differential portion being sequentially disposed on a first axis forming a rotational axis of the input rotary member;
the transmission portion being disposed on a second axis parallel to the first axis; and
a rotary member located on the first axis at an end portion in opposition to the input rotary member, and a rotary member located on the second axis at another end portion in opposition to the input rotary member, being connected to each other through a drive linkage for power transmissive state.

2. The vehicular drive apparatus according to claim 1, further comprising:
a rotary member rotatably disposed on a fourth axis parallel to the first axis and the second axis; and
a final speed reducer disposed on a third axis parallel to the first axis and the second axis;
wherein drive power output from the transmission portion placed on the second axis, is transmitted to the final speed reducer via the rotary member rotatable on the fourth axis.

3. The vehicular drive apparatus according to claim 1 or 2, wherein the second electric motor is disposed on the first axis between the differential portion and a drive linkage.

4. The vehicular drive apparatus according to any one of claims 1 to 3, wherein the drive linkage includes a driving sprocket disposed on the first axis, a driven sprocket disposed on the second axis, and a power transmitting member tensioned between the driving sprocket and the driven sprocket.

5. The vehicular drive apparatus according to any one of claims 1 to 3, wherein the drive linkage includes a drive gear disposed on the first axis, and a driven gear disposed on the second axis and driven with the drive gear.

6. The vehicular drive apparatus according to any one of claims 1 to 5, further comprising:
a differential action limiting device disposed on the first axis between the first electric motor and the differential portion to allow the differential portion to be selectively switched to a differential state and a non-differential state.

7. A vehicular drive apparatus having a differential portion for distributing a drive power input to an input rotary member to a first electric motor and a power transmitting member, a second electric motor disposed in a power transmitting path between the power transmitting member and drive wheels, and a transmission portion disposed between the power transmitting member and drive wheels, comprising:
the first electric motor, the differential portion, the second electric motor, the power transmitting member and the transmission portion being disposed on a first axis serving as a rotational axis of the input rotary member, and a second axis parallel to the first axis;
the transmission portion having a rotational axis placed on the second axis and being mounted on a rotary shaft having a center portion formed with a longitudinal path for introducing lubricating oil; and
a support member, rotatably supporting the rotary shaft, having a lubricating oil passage for supplying lubricating oil to the longitudinal path formed inside the rotary shaft.

8. The vehicular drive apparatus according to claim 7, wherein the longitudinal path formed in the rotary shaft is elongated to a lubricating area of the transmission portion.

9. The vehicular drive apparatus according to claims 7 or 8, further comprising:
a drive linkage including a drive gear connected to the power transmitting member placed on the first axis, and a driven gear connected to the rotary shaft placed on the second axis to be driven with the drive gear, for transmitting the drive power from the power transmitting member to the rotary shaft; and
the longitudinal path formed in the rotary shaft being elongated to the driven gear.

10. The vehicular drive apparatus according to any one of claims 7 or 9, further comprising:
a differential drive gear, for drivably rotating a final speed reducer, which has a shaft portion disposed on the second axis at an end portion thereof with rotatably supported with a housing;
wherein the housing is formed with a lubricating oil passage; and
the differential drive gear is supplied with lubricating oil from the lubricating oil passage of the housing through a longitudinal path formed in the shaft portion.

11. The vehicular drive apparatus according to any one of claims 7 to 10, wherein the transmission portion includes a planetary gear type automatic transmission having a hydraulically operated friction engaging device; and
a supporting member, rotatably supporting the rotary shaft, is formed with an engaging pressure oil passage for supplying an engaging pressure to the hydraulically operated friction engaging device through the rotary shaft.

12. The vehicular drive apparatus according to any one of claims 7 to 11, further comprising:
a hydraulically operated differential action limiting device disposed in the differential portion for selectively switching the differential portion to a differential state and a non-differential state.

13. A vehicular drive apparatus, having a differential portion for distributing a drive power input to an input rotary member to a first electric motor and a power transmitting member, a transmission portion disposed between the power transmitting member and drive wheels, and a final speed reducer disposed between the transmission portion and the drive wheels, comprising:
the power transmitting member being disposed on a first axis forming a rotational axis of the input rotary member;
a differential drive gear or an idler gear being disposed on a second axis parallel to the first axis for drivably rotating the transmission portion and the final speed reducer; and
the transmission portion having an output rotary member spline-coupled to the differential drive gear.

14. The vehicular drive apparatus according to claim 13, further comprising:
a housing for accommodating component parts located on the first axis and the second axis;
wherein the housing includes a first casing portion and a second casing portion for rotatably supporting both end portions of the differential drive gear.

15. The vehicular drive apparatus according to claim 14, further comprising:
a pair of thrust bearings interposed between the differential drive gear and the first casing portion and the second casing portion.

16. The vehicular drive apparatus according to claim 15, wherein:
the differential drive gear comprises a shaft portion, having both ends rotatably supported with the first casing portion and the second casing portion via bearings and having one end spline-coupled to the output rotating member, and an outer circumferential gear portion having an inner circumferential periphery spline-coupled to an outer circumferential periphery of the shaft portion; and
the pair of thrust bearings are interposed between both end surfaces of the outer circumferential gear portion and the first casing portion and the second casing portion.

17. The vehicular drive apparatus according to claim 16, wherein the outer circumferential gear portion and the shaft portion of the differential drive gear have one partial areas, placed in an axial direction, which are spline-coupled to each other, while other partial areas are held in mating engagement with each other.

18. A vehicular drive apparatus, having a differential portion for distributing a drive power input to an input rotary member to a first electric motor and a power transmitting member, and a transmission portion disposed between the power transmitting member and drive wheels, comprising:
the power transmitting member being disposed on a first axis forming a rotational axis of the input rotary member;
the transmission portion being disposed on a second axis parallel to the first axis;
the transmission portion including an input shaft and an output rotary member disposed on the second axis in series to be rotatable relative to each other; and
a support member rotatably supports the input shaft and the output rotary member of the transmission portion.

19. The vehicular drive apparatus according to claim 18, wherein:
the transmission portion comprises an input shaft, an intermediate shaft and an output rotary member, disposed on the second axis in series to be rotatable relative to each other; and
the intermediate shaft of the transmission portion has both end portions rotatably supported with the input shaft and the output rotary member.

20. The vehicular drive apparatus according to any one of claims 13 to 19, further comprising:
a second electric motor disposed in a power transmitting path between the power transmitting member and the drive wheels.

21. The vehicular drive apparatus according to any one of claims 13 to 20, further comprising:
a differential action limiting device disposed on the first axis between the first electric motor and the differential portion for selectively switching the differential portion to a differential state and a non-differential state.

22. A vehicular drive apparatus, comprising:
a differential mechanism for distributing a drive power input from an engine to an electric motor and a power transmitting member;
a final speed reducer transmitting the drive power from the power transmitting member to left and right drive wheels;
the electric motor and the differential mechanism being placed on a first axis;
a differential drive gear disposed on a second axis parallel to the first axis to be driven with the drive power transferred through the power transmitting member for driving the final speed reducer;
the final speed reducer being disposed on a third axis parallel to the first axis and the second axis; and
a partition wall disposed between an airspace in which the electric motor is placed on the first axis, and an airspace for accommodating the differential drive gear placed on the second axis;
wherein a communicating aperture extends through the partition wall between the airspace accommodating the electric motor, and the airspace accommodating the differential drive gear.

23. The vehicular drive apparatus according to claim 22, wherein:
a first electric motor, the differential mechanism and a second electric motor disposed on the first axis in series;
a lid-shaped first casing portion covers the first electric motor and the differential drive gear on sides facing the engine;
a cylindrical second casing portion is disposed, adjacent to the first casing portion, for defining the airspace together with the first casing portion for accommodating the first electric motor and the differential drive gear therein;
a separate wall is provided on the second casing portion for separating the airspace into an air space in which the differential drive gear is located, and an airspace in which the first electric motor is located; and
the communicating aperture is defined with a slight clearance between the separate wall and the first casing portion.

24. The vehicular drive apparatus according to claims 22 or 23, wherein the second axis is installed to be located in an area above the first axis.

25. A vehicular drive apparatus comprising:
a first input shaft to which a drive power is input from a drive power source;
a differential mechanism distributing the drive power input to the input shaft from the drive power source to a first electric motor and a second input shaft, and
the second input shaft being disposed on a first axis in series with the first input shaft and having a longitudinal path for introducing lubricating oil in an axial direction;
wherein a cylindrical casing portion rotatably supports the second input shaft while surrounding an outer circumferential area thereof; and
the casing portion has a lubricating oil passage through which lubricating oil is supplied to the longitudinal path of the second input shaft.

26. The vehicular drive apparatus according to claim 25, further comprising:
a second electric motor through which the second input shaft extends;
a pair of support walls protruding radially inward from the casing portion for rotatably supporting a rotor of the second electric motor; and
a drive gear rotatably supported with the support wall forming one of the pair of support walls, and being placed in opposition to the drive force source side with located in opposition to the second electric motor;
wherein the lubricating oil passage is formed between a support area of the support wall placed in opposition to the drive force source for supporting the rotor of the second electric motor, and a support area for the drive gear.

27. The vehicular drive apparatus according to claims 25 or 26, wherein the first electric motor is disposed in an outer circumferential area of the first input shaft.

28. The vehicular drive apparatus according to any one of claims 25 to 27,
wherein the differential mechanism is provided on an outer circumferential area of the first input shaft.

29. The vehicular drive apparatus according to any one of claims 25 to 28, further comprising:
a differential action limiting device, operative to limit a differential action of the differential mechanism, which is provided on an outer circumferential area of the first input shaft.

30. The vehicular drive apparatus according to any one of claims 25 to 29,
wherein:
the second input shaft has an axial end portion held in mating engagement with an axial end portion of the first input shaft to be rotatable relative thereto; and
the second input shaft has a longitudinal oil passage held in fluid communication with a longitudinal oil passage formed in the first input shaft.

31. The vehicular drive apparatus according to claim 30, wherein an axial end portion of the second input shaft and an axial end portion of the first input shaft, held in mating engagement with each other, have radiated oil passages held in fluid communication with each other in a radial direction for supplying lubricating oil to the differential mechanism via the radiated oil passages.

32. The vehicular drive apparatus according to claims 30 or 31, wherein the longitudinal path of the second input shaft extends to a lubricating area of the drive gear to allow lubricating oil to be supplied to the longitudinal path of the second input shaft, via the lubricating oil passage formed in the casing portion, in bifurcated flows to the drive gear side and the differential mechanism side.
